# EUROPEAN PATENT SPECIFICATION

(11) **EP 1 750 356 B1**
(45) Date of publication and mention of the grant of the patent: **16.02.2011**
(21) Application number: 06016370.6
(22) Date of filing: 04.08.2006
(51) Int. Cl.: H02K 21/00

(54) **Stator for rotary electric machine**
Stator für eine rotierende elektrische Maschine
Stator pour machine électrique tournante

(30) Priority: 05.08.2005 JP 2005228944; 03.03.2006 JP 2006058651
(43) Date of publication of application: 07.02.2007
(73) Proprietor: Yamaha Hatsudoki Kabushiki Kaisha, Shizuoka-ken Shizuoka 438-8501 (JP)
(72) Inventor: Hino, Haruyoshi, Iwata-shi Shizuoka-ken 438-8501 (JP); Nakajima, Masumi, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 542 342
- EP-A2- 1 220 427
- EP-A2- 1 388 923
- US-A- 4 027 229
- US-A- 5 834 874

## Description

The present invention relates to a stator for a rotary electric machine according to the preamble of claim 1. Such a device is known from EP 1 388 923.

Heretofore, as rotary electric machine (electric motor that also functions as a power generator) for use in saddle-type vehicles including motorcycles, there have been developed those which assist the driving force of the engine to drive the vehicle or those which drive the vehicle by their own driving force alone.

In general, the output characteristics of a rotary electric machine such as rotational speed and torque are restricted within a narrow range due to the mechanism of the rotary electric machine. For example, a rotary electric machine having field magnets which generate a strong magnetic flux and capable of rotating at high torque cannot be driven at low torque and high speed whereas a rotary electric machine capable of rotating at low torque and high speed cannot be driven at high torque and low speed. That is, the output characteristics of a rotary electric machine are limited by the mechanism of the rotary electric machine.

This is because an induced electromotive force is generated in the coils when the magnetic flux from the field magnets flow across the coils, and a magnetic flux generated by the induced electromotive force applies a force in the direction opposite the rotating direction of the rotor to the field magnets.

One known method to overcome the problem is to change the output characteristics by field-weakening control. In this method, electric power is supplied to the coils to generate a magnetic flux in a direction opposite the direction of the magnetic flux generated by the induced electromotive force when the magnetic flux from the field magnets flows across the coils. However, this method is not efficient since electric power which does not contribute to the rotation of the rotary electric machine must be supplied.

In view of this, there has been proposed a technique according to which the magnetic flux generated in a rotary electric machine is mechanically changed to thereby change the output characteristics. For example, JP-A 2004-104943 discloses a technique for changing the output characteristics of a radial gap type rotary electric machine, that is, a rotary electric machine provided with a rotor having field magnets arranged around the rotating shaft and a stator located in the radial direction of the rotor and surrounding the rotor. In the rotary electric machine, the intensity of the magnetic field is varied by moving the rotor along the axial direction of the rotating shaft relative to the stator to thereby change the output characteristics.

However, in the rotary electric machine, the rotor rotating at high speed is moved in the axial direction of the rotating shaft, which makes It difficult to perform precise control of the position of the rotor and hence precise control of the output characteristics.

In this regard, it may be possible to adopt a method of moving the stationary stator as a whole in the axial direction of the rotating shaft and relative to the rotor, thereby controlling the position of the stator with precision. However, since a stator is generally equipped with a coil and so on and thus has a large weight, it is difficult to move the entire stator by means of a low power actuator. It is thus difficult to achieve precise control of the output characteristics of a rotary electric machine by precisely changing the position of a stator having a large weight

The present invention has been made in view of the above-mentioned problems. Accordingly, it is an object of the present invention to provide a stator for a rotary electric motor which enables precise control of output characteristics.

The objective is solved in an inventive manner by a stator according to claim 1. Such a stator for an axial gap type rotary electric machine which is opposed to a rotor in a direction of an axis of a rotating shaft, comprising an annular first stator having a plurality of first teeth arranged in an annular shape surrounding the axis, and an annular second stator having a plurality of second teeth arranged in an annular shape surrounding the axis and opposed to the plurality of first teeth in the direction of the axis, the second stator being attracted toward the first stator by a magnetic force and rotatable about the axis, wherein a coil is wound around each of the plurality of first teeth, and the first stator has a contacted surface with which the second stator is in direct or indirect contact, regulating a distance in the direction of the axis between a surface of the first stator which faces the second stator and in which the plurality of first teeth are buried, and a surface of the second stator which faces the first stator and in which the plurality of second teeth are buried.

Preferably, the second stator has a circular cylindrical inner or outer peripheral surface centered around the axis, and the first stator has a cylindrical rotation supporting surface centered around the axis and in direct or indirect contact with the inner or outer peripheral surface of the second stator, and supports the second stator so as to be rotatable about the axis.

An example of a stator which is not an embodiment of the invention, but is useful for understanding the invention, is a stator for a radial gap type rotary electric machine which is opposed to a rotor surrounding a rotating shaft and is located outside or inside the rotor in a radial direction of the rotating shaft comprising a first stator having a plurality of first teeth arranged in an annular shape surrounding an axis of the rotating shaft and having cylindrical outer and inner peripheral surfaces centered around the axis, and a second stator having a plurality of second teeth arranged an annular shape surrounding the axis and having cylindrical outer and inner peripheral surfaces centered around the axis, the second teeth being radially opposed to the first teeth, wherein a coil is wound around each of the plurality of first teeth, the inner peripheral surface of one of the first stator and the second stator is formed larger in diameter than the outer peripheral surface of the other of the first stator and the second stator, the other of the first stator and the second stator is inserted into the one of the first stator and the second stator, and the first stator supports the second stator so as to be rotatable about the axis.

Preferably, one of the outer and inner peripheral surfaces of the first stator is radially opposed to the second stator, a cylindrical rotation supporting surface centered around the axis is formed on the one of the outer and inner peripheral surfaces of the first stator, and the rotation supporting surface is in direct or indirect contact with the second stator.

An example of a stator which is not an embodiment of the invention, but is useful for understanding the invention, is a stator for a radial gap type rotary electric machine which is opposed to a rotor surrounding a rotating shaft and is located outside or inside the rotor in a radial direction of the rotating shaft comprising a first stator having a plurality of first teeth arranged in an annular shape surrounding an axis of the rotating shaft and having cylindrical outer and inner peripheral surfaces centered around the axis, and a second stator having a plurality of second teeth arranged in an annular shape surrounding the axis and having cylindrical outer and inner peripheral surfaces centered around the axis, the second teeth being radially opposed to the first teeth, wherein a coil is wound around each of the plurality of first teeth, the inner peripheral surface of one of the first stator and the second stator is formed larger in diameter than the outer peripheral surface of the other of the first stator and the second stator, the other of the first stator and the second stator is inserted into the one of the first stator and the second stator, and the first stator is fixed to a fixed member, and the second stator is supported by a circular cylindrical portion so as to be rotatable around the axis, the circular cylindrical portion being formed in the fixed member and centered around the axis.

Preferably, the inner or outer peripheral surface of the second stator is in direct or indirect contact with a cylindrical rotation supporting surface formed in the cylindrical portion of the fixed member.

A rotary electric machine may comprise the stator according to the above embodiment

An engine may be coupled to a rotary electric machine including the stator according to the above embodiment.

Further, a vehicle may comprise a rotary electric machine including the stator according to the above embodiment

In the following, the present invention is explained in greater detail with respect to several embodiments thereof in conjunction with the accompanying drawings, wherein:
- FIG. 1: is a side view of a motorcycle incorporating a rotary electric machine equipped with a stator according to a first embodiment,
- FIG. 2: is a side view of a rear part of the motorcycle,
- FIG. 3: is a cross-sectional view taken along the line III-III of FIG. 2,
- FIG. 4: is an enlarged view of FIG. 3,
- FIG. 5: is an exploded perspective view of the rotary electric machine,
- FIG. 6: shows a front view and a rear view of a first stator constituting the stator, with the front view showing the side of the first stator facing a rotor and the rear view showing the side of the first stator facing a second stator,
- FIG. 7: is a cross-sectional view taken along the line VII-VII of FIG. 6,
- FIG. 8: is a cross-sectional view taken along the line VIII-VIII of FIG. 8,
- FIG. 9: is a perspective view illustrating the side of the first stator facing the rotor.
- FIG. 10: is a perspective view illustrating the side of the first stator facing the second stator,
- FIG. 11: is a front view of the second stator constituting the stator, illustrating the side of the second stator facing the first stator.
- FIG. 12 :: is a cross-sectional view taken along the line XII-XII of FIG. 11,
- FIG. 13:: is a cross-sectional view taken along the line XIII-XIII of FIG. 11,
- FIG. 14:: is a perspective view illustrating the side of the second stator facing the first stator,
- FIG. 15 :: is a perspective view illustrating the side of the second stator opposite the side facing the first stator,
- FIG. 16 :: is a view illustrating how the second stator rotates,
- FIG. 17 :: is a view illustrating the changes in magnetic flux in the rotary electric machine,
- FIG. 18 :: is a cross-sectional view of a rotary electric machine equipped with a stator according to another embodiment,
- FIG, 19 :: is an enlarged view of the stator shown in FIG. 18,
- FIG. 20 :: is a cross-sectional view illustrating a rotary electric machine equipped with a stator according to an example which is not an embodiment of the invention,
- FIG. 21 :: is an exploded perspective view of the rotary electric machine shown in FIG. 20,
- FIG. 22 :: is an enlarged view of FIG. 20,
- FIG. 23 :: is a cross-sectional view illustrating a rotary electric machine equipped with a stator according to an example which is not an embodiment of the invention,
- FIG. 24:: is a cross-sectional view illustrating a rotary electric machine equipped with a stator according to an example which is not an embodiment of the invention,
- FIG. 25:: is an enlarged view of FIG. 24,
- FIG. 26:: is a cross-sectional view illustrating a rotary electric machine equipped with a stator according to an example which is not an embodiment of the invention.
- FIG. 27 :: is an exploded perspective view of the rotary electric machine shown in FIG. 26, and
- FIG. 28 :: is an enlarged view of FIG. 26.

### Description of Reference Numerals:

1: motorcycle
3: front wheel
5: front fork
7: steering shaft
9: handlebars
10: body frame
13: seat
15: rear suspension
16: rear arm
17: rear wheel
19: case cover
20: rotary electric machine
21: rotor
22: yoke
23: field magnet
25: stator
30: first stator
31: coil
34: first teeth
36: resin part of first stator
37: engaging portion
38: pin
39: cutout
40: second stator
41: second teeth
42: base
43: resin part of second stator
45: gear engaging portion
50: engine
51: crankshaft
52: bearing
53: oil-retaining bearing
55: one-way clutch
56: flywheel
57: nut
60: starter motor
61: starting speed-reduction gear
62: gear
63: bearing
64: bearing
66: motor
68: gear
70: rotor
71: yoke
87: circlip
100: air cooling fin
101: case
190: crankcase
200: rotary electric machine
225: stator
240: yoke
250: stator
300: first stator
330: first stator
336: resin part
337: engaging portion
339: cutout
360: resin part of first stator
400: second stator
430: resin part of second stator
440: second stator
443: resin part
450: gear engaging portion
445: gear engaging portion

### First Embodiment

A first embodiment will now be described with reference to the drawings.

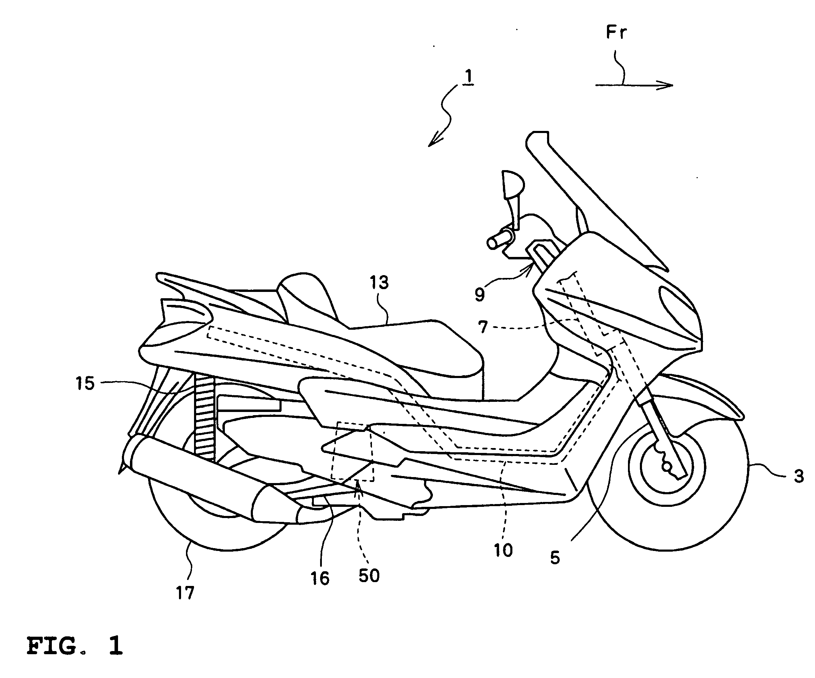

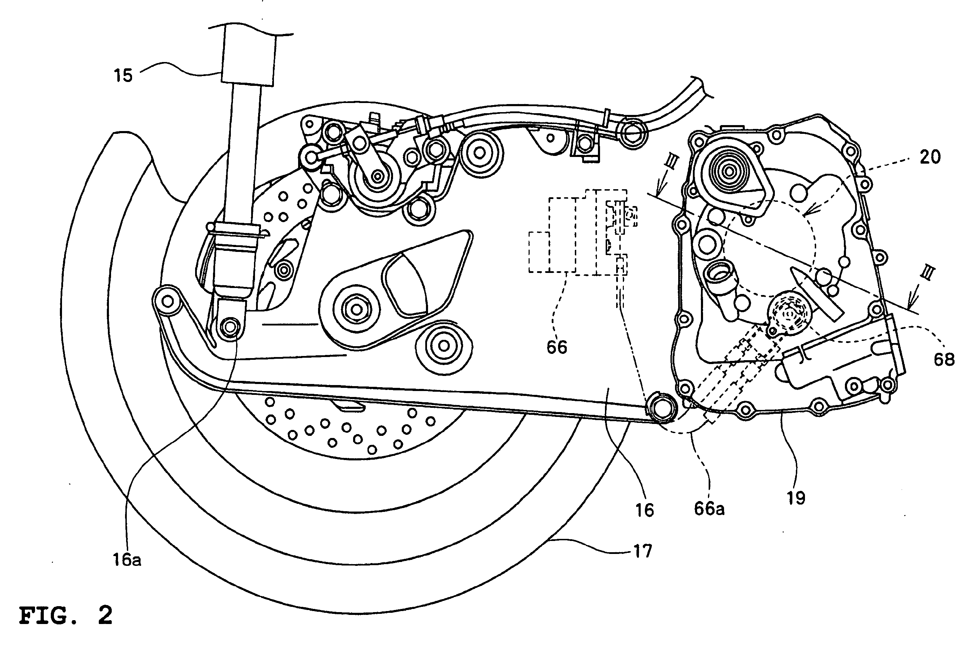

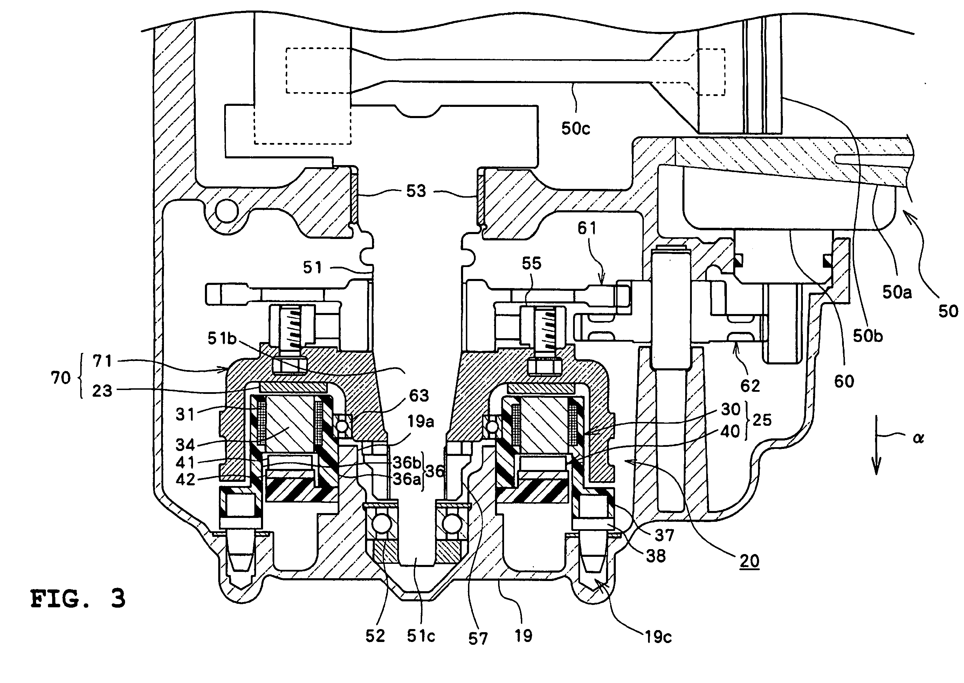

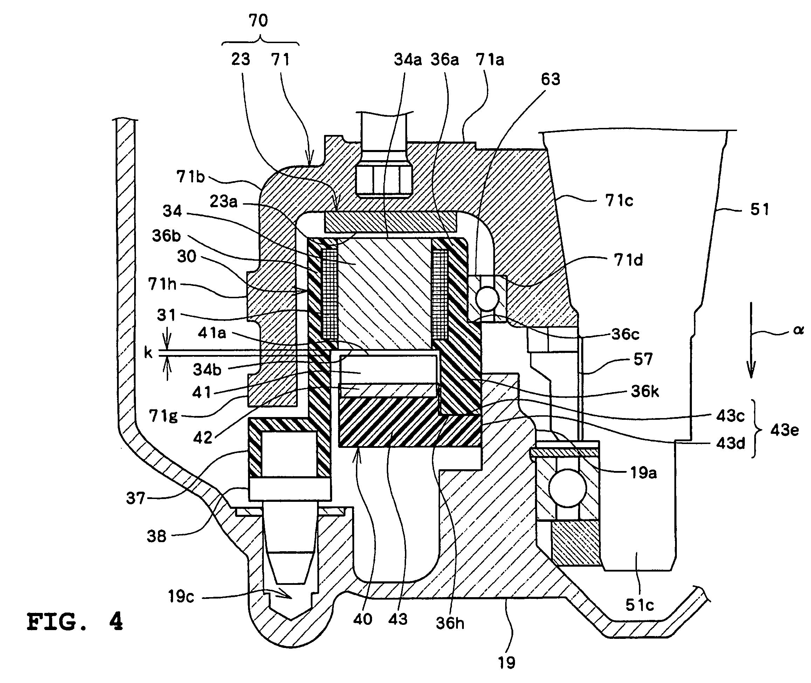

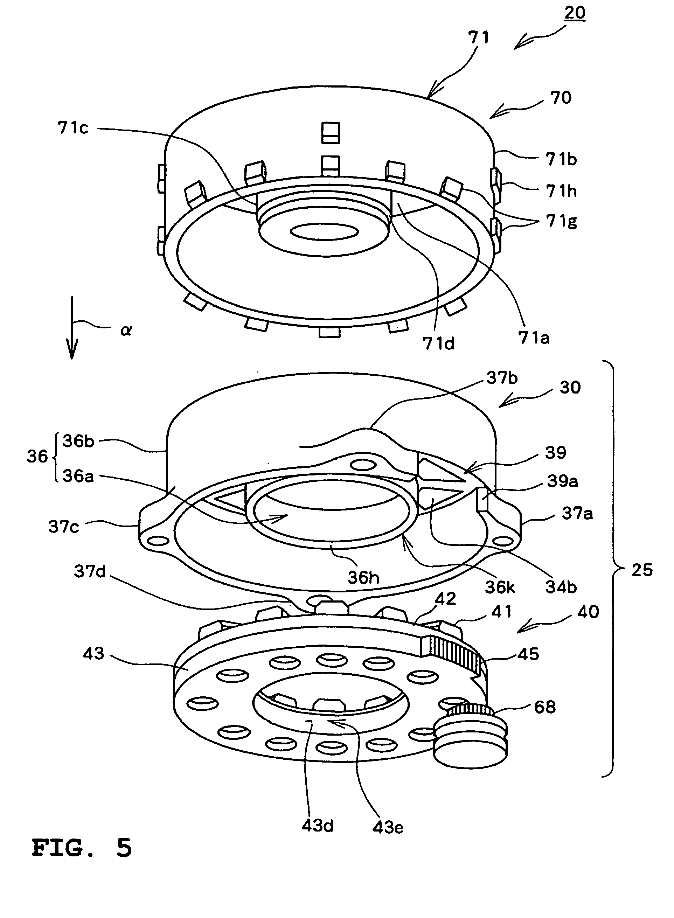

FIG. 1 is a side view of a motorcycle 1 incorporating a rotary electric machine 20 equipped with a stator 25 according to the present embodiment, FIG. 2 is a side view of a rear part of the motorcycle 1, FIG. 3 is a cross-sectional view taken along the line III-III of FIG. 2, and FIG. 4 is an enlarged view of the rotary electric machine 20 with the rotor 25 shown in FIG. 3. FIG. 5 is an exploded perspective view of the rotary electric machine 20.

As shown in FIG. 1, the motorcycle 1 has a front wheel 3 at a lower front part of its vehicle body. The front wheel 3 is rotatably supported at the lower end of a front fork 5. A steering shaft 7 extending upward is connected to the upper end of the front fork 5. Handlebars 9 extending in the vehicle width direction are attached to the upper end of the steering shaft 7. A body frame 10 is attached to an intermediate portion of the steering shaft 7.

The body frame 10 first extends obliquely downward toward the rear of the vehicle body and is then bent to extend horizontally. The body frame 10 is further bent thereafter to extend straight. A seat 13 is placed on an upper rear part of the body frame 10. To the rear end of the body frame 10 is connected the upper end of a rear suspension 15. The lower end of the rear suspension 15 is connected to a rear end 16a of a rear arm 16 (see FIG. 2). The rear arm 16 rotatably supports a rear wheel 17. The rear wheel 17 is rotationally driven by the driving force of an engine 50 transmitted via a driving force transmitting mechanism such as a belt-driven continuously variable transmission. The engine 50 is located below an intermediate portion of the body frame 10.

The engine 50 has a cylinder 50a at its center. The cylinder 50a houses a piston 50b. The piston 50b is connected to the upper end of a connecting rod 50c, and a crankshaft 51 is attached to the lower end of the connecting rod 50c. The crankshaft 51 serves as an output shaft of the engine 50, and the driving force of the engine 50 is transmitted from the crankshaft 51 to the rear wheel 17 via the driving force transmitting mechanism.

The rotary electric machine 20 is disposed outside the engine 50 in the vehicle width direction (the side indicated by α in FIG. 3). The crankshaft 51 serves as the output shaft of the rotary electric machine 20. The rotary electric machine 20 can assist the driving force of the engine 50 to drive the vehicle or can drive the vehicle by its own driving force alone (see FIG. 3). The rotary electric machine 20 also functions as a power generator when the charged capacity of a battery (not shown) is lower than a predetermined value.

As shown in FIG. 3 or FIG. 4, a bearing 52 is retained on a case cover 19 covering a crankcase 50d from the side. The crankshaft 51 is rotatably supported by the bearing 52. The proximal side of the crankshaft 51 is rotatably supported by an oil-retaining bearing 53 which is supported on the crankcase 50d. The case cover 19 has a circular cylindrical portion 19a extending inward in the vehicle width direction (the direction from an end 51 c to the proximal side of the crankshaft 51) from the peripheral edge of the end 51 c of the crankshaft 51. The cylindrical portion 19a supports the stator 25 of the rotary electric machine 20, which is described later. The structure of the cylindrical portion 19a for supporting the stator 25 is described later in detail.

A starting speed-reduction gear 61, a one-way clutch 55, and the rotary electric machine 20 are mounted on the crankshaft 51 in this order from the proximal side (the side to which the connecting rod 50c is connected) to the end 51c.

The starting speed-reduction gear 61 is connected to a starter motor 60 via a gear 62. When the engine is started, the driving force of the starter motor 60 is transmitted to the crankshaft 51 via the gear 62, the starting speed-reduction gear 61, the one-way clutch 55, and a yoke 71 of the rotary electric machine 20. When the start of the engine 50 is completed, the driving of the starter motor 60 is stopped and the one-way clutch 55 rotates independently from the starting speed-reduction gear 61 so that the driving force of the engine 50 is not transmitted to the starter motor 60. The starting speed-reduction gear 61 rotates idle relative to the crankshaft 51.

The rotary electric machine 20 is an axial gap type rotary electric machine, that is, a rotary electric machine in which a stator faces a rotor along the direction of the axis (hereinafter, referred to as the "axial direction") of a rotating shaft (the crankshaft 51 in this example). The rotary electric machine 20 is attached to the crankshaft 51 at a position outside the one-way clutch 55 in the vehicle width direction (the direction from the proximal side to the end 51 c of the crankshaft 51).

The rotary electric machine 20 has the rotor 70 and the stator 25 arranged in this order from the proximal side of the crankshaft 51. The rotor 70 has the yoke 71 and the field magnets 23. The yoke 71 is substantially cup-shaped and has a disk-shaped disk portion 71a, a cylindrical outer cylindrical portion 71 b, and a cylindrical inner cylindrical portion 71c. The disk portion 71 a has at its center an insertion hole through which the crankshaft 51 is inserted. The inner cylindrical portion 71 c extends in the axial direction from the edge of the insertion hole. The outer cylindrical portion 71 b extends in the axial direction toward the stator 25.

The inner peripheral surface of the inner cylindrical portion 71c of the yoke 71 is formed so as to gradually decrease in diameter toward the end 51 c of the crankshaft 51. The crankshaft 51 has a taper portion 51 b which gradually decreases in diameter toward the end 51c. A nut 57 is fitted on the crankshaft 51 from outside in the vehicle width direction of the yoke 71. The nut 57 presses the yoke 71 toward the proximal side of the crankshaft 51. The inner peripheral surface of the inner cylindrical portion 71 c of the yoke 71 is thus held in press contact against the outer peripheral surface of the taper portion 51 b of the crankshaft 51. As a result, the yoke 71 comes into frictional engagement with the crankshaft 51, so the driving force of the rotary electric machine 20 is transmitted to the crankshaft 51 from the yoke 71.

The disk portion 71 a has a plurality of bolt-fixing through holes arranged in a circle. The one-way clutch 55 has bolt holes formed at positions corresponding to the through holes. Bolts are inserted in the through holes and the bolt holes opposed to each other and fastened to fix the yoke 71 to the one-way clutch 55.

The plurality of field magnets 23 are attached to the surface of the disk portion 71 a facing the stator 25 and arranged perpendicular to the axial direction. The plurality of field magnets 23 are arranged in a circle around the axis of the crankshaft 51 (hereinafter, referred to as "around the axis") with their magnetic poles (N-pole and S-pole) alternating in polarity.

The outer cylindrical portion 71 b of the yoke 71 is formed at a large thickness so that the yoke 71 has inertial mass. The yoke 71 functions also as a flywheel. A plurality of projections 71 g and a plurality of projections 71 h are formed on the outer peripheral surface of the outer cylindrical portion 71b. The projections 71 g, which are used to detect the rotation angle of the rotor 70, are arranged circumferentially at regular intervals (see FIG. 5). The projections 71 h, which are used to detect the positions of the field magnets 23, are provided to the field magnets 23 with the same polarity (N-pole or S-pole).

As described before, the rotary electric machine 20 has the stator 25. The stator 25 according to this embodiment has a first stator 30 and a second stator 40 facing the first stator 30 in the axial direction. In the rotary electric machine 20, the second stator 40 rotates around the axis to change the output characteristics of the rotary electric machine 20.

The stator 25 is described in detail below.

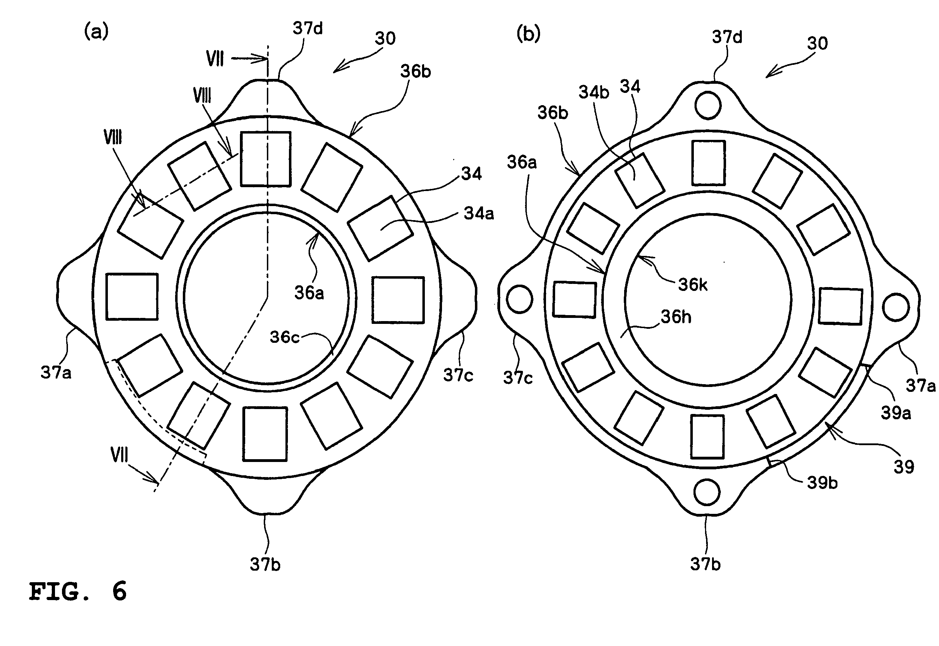

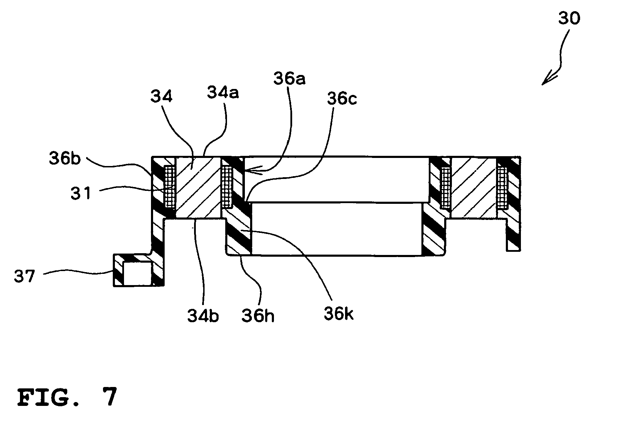

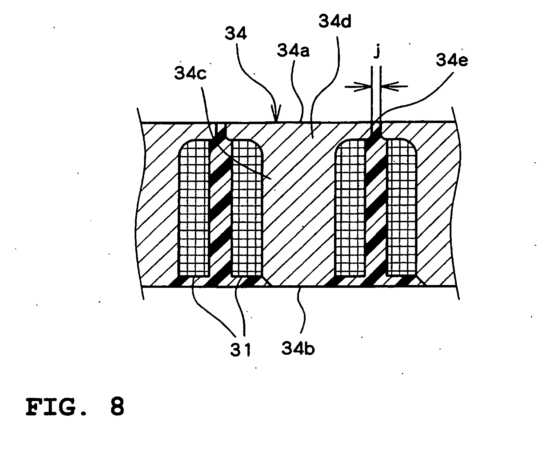

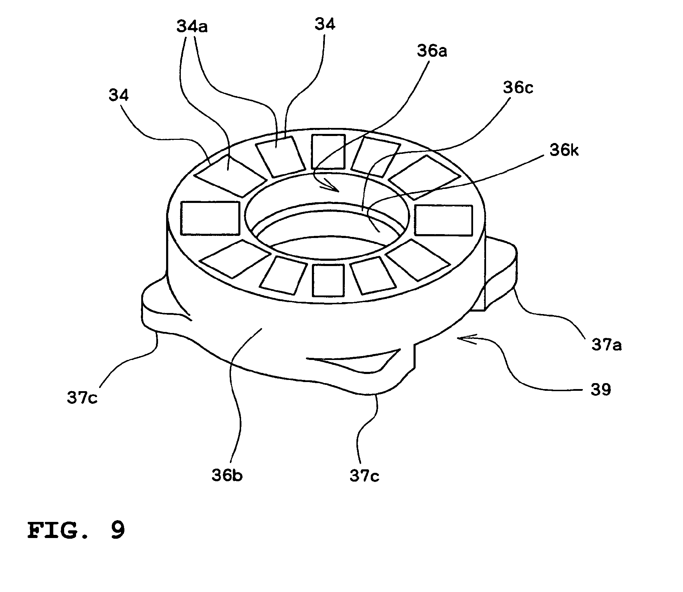

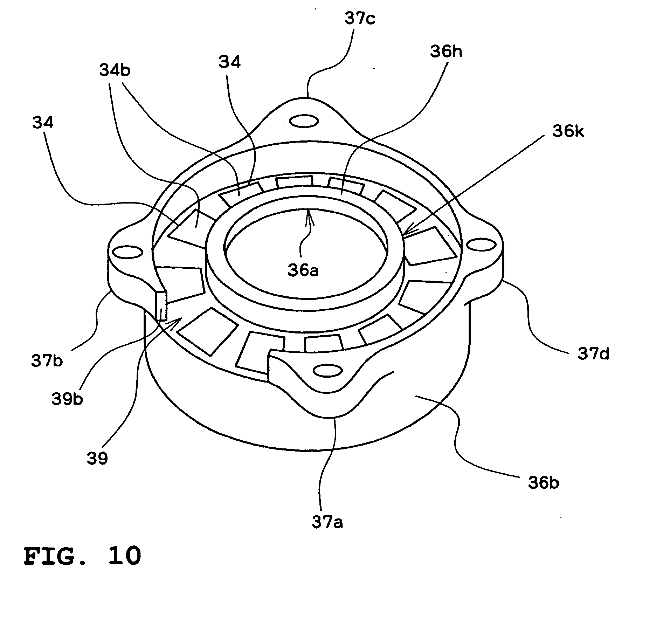

First, the first stator is described in detail with reference to FIG. 3 to FIG. 10. FIG. 6(a) is a front view of the first stator 30 (showing the side facing the rotor 21), FIG. 6(b) is a rear view of the first stator 30 (showing the side facing the second stator 40), FIG. 7 is a cross-sectional view taken along the line VII-VII of FIG. 6, FIG. 8 is a cross-sectional view taken along the line VIII-VIII of FIG. 6, and FIG. 9 and FIG. 10 are perspective views of the first stator 30. FIG. 9 is a perspective view illustrating the side of the first stator 30 facing the rotor 70, and FIG. 10 is a perspective view illustrating the side of the first stator 30 facing the second stator 40.

The first stator 30 has a plurality of first teeth 34 each made of iron, and coils 31 wound around the first teeth 34. The first teeth 34 and the coils 31 are molded by a resin part 36 made of a resin containing a lubricant. The plurality of first teeth 34 are arranged in a circle around the axis of the crankshaft 51, and the first stator 30 has a generally annular shape (see FIG. 6).

As shown in FIG. 8, each of the first teeth 34 has a coil winding portion 34c on the side peripheral surface of which the coil 31 is wound, and a magnet opposing portion 34d facing the field magnets 23 of the rotor 70. The width (length in the transverse direction (circumferential direction of the first stator)) of the magnet opposing portion 34d is larger than the width of the coil winding portion 34c. Thus, the magnet opposing portion 34d has an end face 34a (side facing the field magnets 23) larger than an end face 34b (side facing the second stator 40) of the coil winding portion 34c. The second stator 40 side edges of the coil winding portion 34c are chamfered, so that the width of the end face 34b is smaller than that of the coil winding portion 34c.

The distance j between adjacent magnet opposing portions 34d (distance between a transverse end face of a magnet opposing portion 34d and a transverse end face of a magnetic opposing portion 34d of adjacent first teeth 34) is greater than the distance k between the end faces 34b of the coil winding portions 34c and end faces 41a of second teeth 41 of the second stator 40 (see FIG.4).

The resin part 36 has an inner peripheral portion 36a and an outer peripheral portion 36b. The inner peripheral portion 36a is located radially inside the first teeth 34 and the coils 31 (on the side of the axis of the crankshaft 51) and has a cylindrical shape surrounding the crankshaft 51. The outer peripheral portion 36b is located radially outside the first teeth 34 and the coils 31 and similarly has a cylindrical shape surrounding the axis of the crankshaft 51 (see FIG. 4 or FIG. 6).

The outer peripheral portion 36b extends outward in the vehicle width direction (direction from the proximal side (cylinder 50a side) to the end 51 c of the crankshaft 51 in the axial direction). A plurality of engaging portions 37 (37a, 37b, 37c, 37d) are formed at the edge of the outer peripheral portion 36b so as to extend radially outward from the edge (see FIG. 6). Each of the engaging portions 37 has a recess opening outward in the vehicle width direction. The case cover 19 has recesses 19c at positions corresponding to the engaging portions 37. One ends of pins 38 are fitted in the recesses of the engaging portions 37. The other ends of the pins 38 are fitted in the recesses 19c in a removable manner, that is, in a manner such that they can be freely pulled out from the recesses 19c. Therefore, the first stator 30 is mounted to the case cover 19 so that it is restricted from rotating about the axis but movable in the axial direction.

The part of the outer peripheral portion 36b between the engaging portion 37a and the engaging portion 37b adjacent to the engaging portion 37a is cut out, forming a cutout 39 opening radially outward. A gear engaging portion 45 of the second stator 40 protrudes radially outward through the cutout 39. The gear engaging portion 45 is in meshing engagement with a gear 68 for rotating the second stator 40. When torque is transmitted from the gear 68, the second stator 40 rotates about the axis (see FIG. 5). The gear engaging portion 45 of the second stator 40 and the rotation of the second stator 40 are described later in detail.

A bearing supporting surface 36c is formed on the inner peripheral surface of the inner peripheral portion 36a of the resin part 36. The bearing supporting surface 36c is formed in an annular shape perpendicular to the axis of the crankshaft 51. A bearing supporting surface 71 d is formed on the outer peripheral surface of the inner cylindrical portion 71 c of the yoke 71. The bearing supporting surface 71d is formed in an annular shape perpendicular to the axis of the crankshaft 51. An annular bearing 63 is disposed between the bearing supporting surface 71 d and the bearing supporting surface 36c of the first stator 30. Accordingly, the first stator 30 is restricted from moving toward the yoke 71. That is, as described before, the first stator 30 is attached to the case cover 19 so as to be movable in the axial direction. The first teeth 34 are attracted toward the field magnets 23 by the magnetic force of the field magnets 23. The bearing 63 is supported on the bearing supporting surface 71 d of the yoke 71, presses the first stator 30 outward in the vehicle width direction, and supports the first stator 30 against the magnetic force of the field magnets 23 to thereby restrict the first stator 30 from moving toward the yoke 71.

A contacted portion 36k of a cylindrical shape surrounding the axis of the crankshaft 51 is formed on the inner peripheral portion 36a of the resin part 36. The contacted portion 36k extends outward in the vehicle width direction beyond the plane including the second stator 40 side end faces 34b of the first teeth 34. The entire inner peripheral surface of the contacted portion 36k is in contact with the outer peripheral surface of the cylindrical portion 19a of the case cover 19. The radial position of the first stator 30 is thus fixed and the first stator 30 is prevented from vibrating when the rotary electric machine 20 is driven.

An end face (contacting face) 36h of the contacted portion 36k on the outside in the vehicle width direction (second stator 40 side) is formed perpendicular to the axis of the crankshaft 51. The second stator 40 is in contact with and supported on the end face 36h. The supporting structure for the second stator 40 by the first structure 30 is described later in detail.

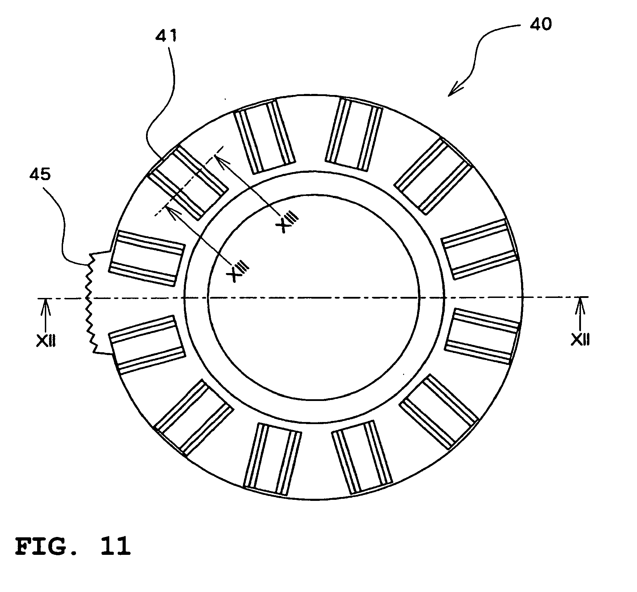

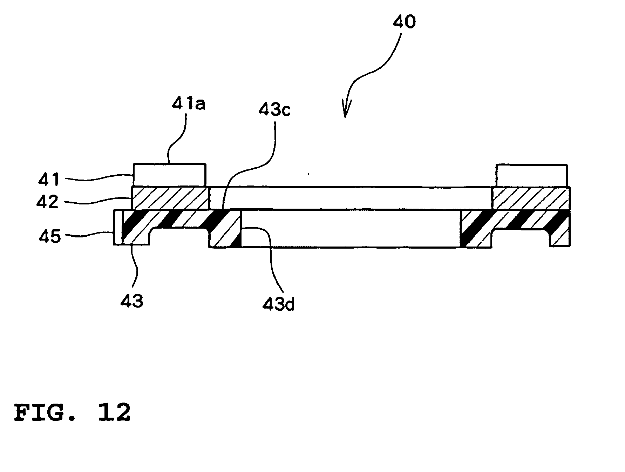

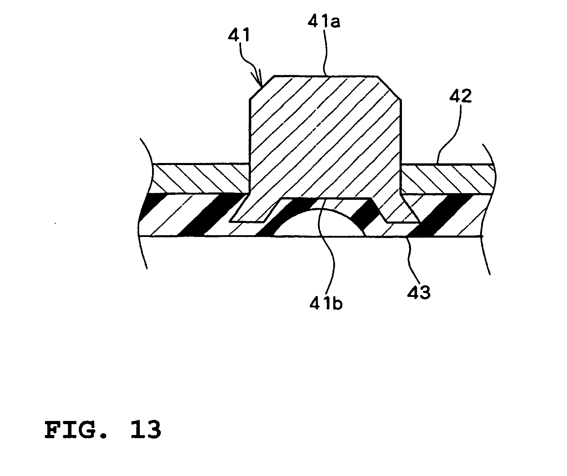

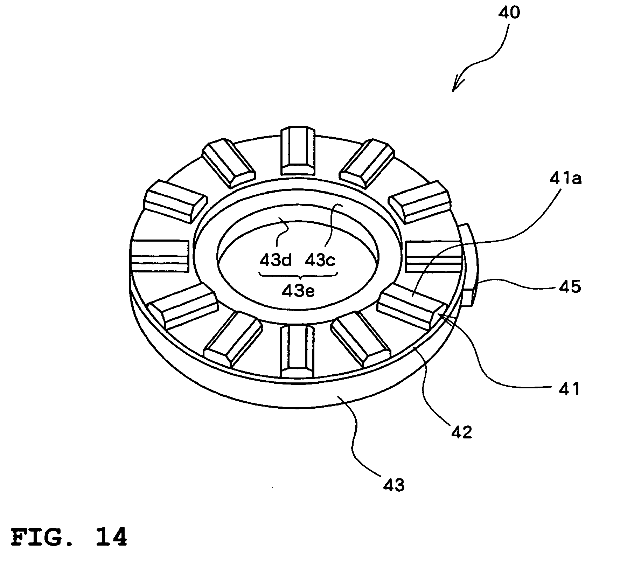

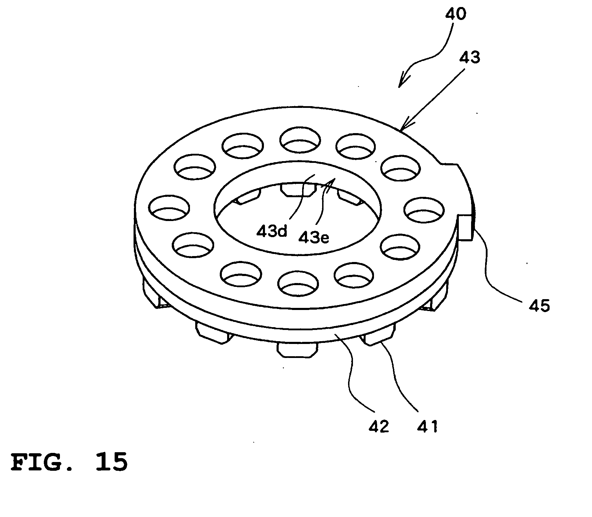

Next, the second stator 40 is described in detail with reference to FIG. 3 to FIG. 5 and FIG. 11 to FIG. 15. FIG. 11 is a front view of the second stator 40 (view showing the side facing the first stator 30), FIG. 12 is a cross-sectional view taken along the line XII-XII of FIG. 11, and FIG. 13 is a cross-sectional view taken along the line XIII-XIII of FIG. 11. FIG. 14 and FIG. 15 are perspective views of the second stator 40. FIG. 14 is a perspective view illustrating the side of the second stator 40 facing the first stator 30, and FIG. 15 is a perspective view illustrating the side of the second stator 40 opposite the side facing the first stator 30.

The second stator 40 has a plurality of second teeth 41 and a base 42. The second teeth 41 are arranged in a circle around the axis of the crankshaft 51 so as to face the first teeth 34. The base 42 is formed in a disk-like shape and has a plurality of fitting holes arranged in a circle. The second teeth 41 are press-fitted in the fitting holes and held in an annular configuration by the base 42. The second stator 40 has a substantially annular resin part 43 that is attached to the back side (side opposite to the side facing the first stator 30) of the base 42. The resin part 43 is made of a resin containing a lubricant.

As shown in FIG. 13 or FIG. 14, each of the second teeth 41 is made of iron and has a rectangular shape as viewed in a plan view. Each of the second teeth 41 is chamfered at corners and has a hexagonal shape as viewed in a transverse cross-section. The width (length in the transverse direction (circumferential direction of the second stator 40)) of end faces 41 a of the second teeth 41 on the side of the first teeth 34 is smaller than the width of end faces 41 b on the opposite side.

The resin part 43 has an annular contacting portion 43e extending radially inward. The diameter of an inner periphery (rotation supported surface) 43d of the contacting portion 43e is equal to that of the outer periphery (rotation supporting surface) of the cylindrical portion 19a of the case cover 19. The entire inner peripheral surface of the inner periphery 43d is in contact with the outer peripheral surface of the cylindrical portion 19a. The second stator 40 is thereby supported by the case cover 19 so as to be rotatable about the axis.

The contacting portion 43e of the second stator 40 is in contact with the first stator 30, whereby the distance k between the end faces 34b of the first teeth 34 and the end faces 41 a of the second teeth 41 is regulated.

That is, the second teeth 41 are attracted toward the first stator 30 by the magnetic force generated by the first stator 30. The inside and outside diameters of an end face 43c (contacting face) of the annular contacting portion 43e on the inside in the vehicle width direction are substantially equal to those of the end face 36h (contacted face) of the contacted portion 36k. The end face 43c is in contact with the end face 36h of the contacted portion 36k, whereby the contacted portion 36k presses the second stator 40 outward in the vehicle width direction against the magnetic force to thereby restrict the second stator 40 from moving toward the first stator 30. The difference between the length of the contacted portion 36k in the axial direction (distance from the plane including the end faces 34b of the first teeth 34 to the end face 36h) and the distance from the plane including the end faces 41 a of the second teeth 41 to the end face 43c of the contacted portion 43e corresponds to the distance k. The distance k is ensured by the contacting portion 36k of the first stator 30 thus contacting the second stator 40.

An annular space is formed between the outer peripheral surface of the contacted portion 36k of the first stator 30 and the inner peripheral surface of the outer peripheral portion 36b of the first stator 30, and the plurality of second teeth 41 are arranged in a circle in this space.

The resin part 43 of the second stator 40 has the gear engaging portion 45 protruding radially outward and having a prescribed circumferential length. As described before, the gear engaging portion 45 protrudes radially outward through the cutout 39 provided in the outer peripheral portion 36b, and can reciprocate circumferentially within the cutout 39. A gear 68, which is disposed radially outside the rotary electric machine 20, is in meshing engagement with the gear engaging portion 45 (see FIG. 2 or FIG. 5). Wires 66a connected to a motor 66 are wound around the gear 68. The forward or reverse rotation of the motor 66 is transmitted to the second stator 40 via the wires 66a and the gear 68a, causing the second stator 40 to rotate forward or reverse about the axis.

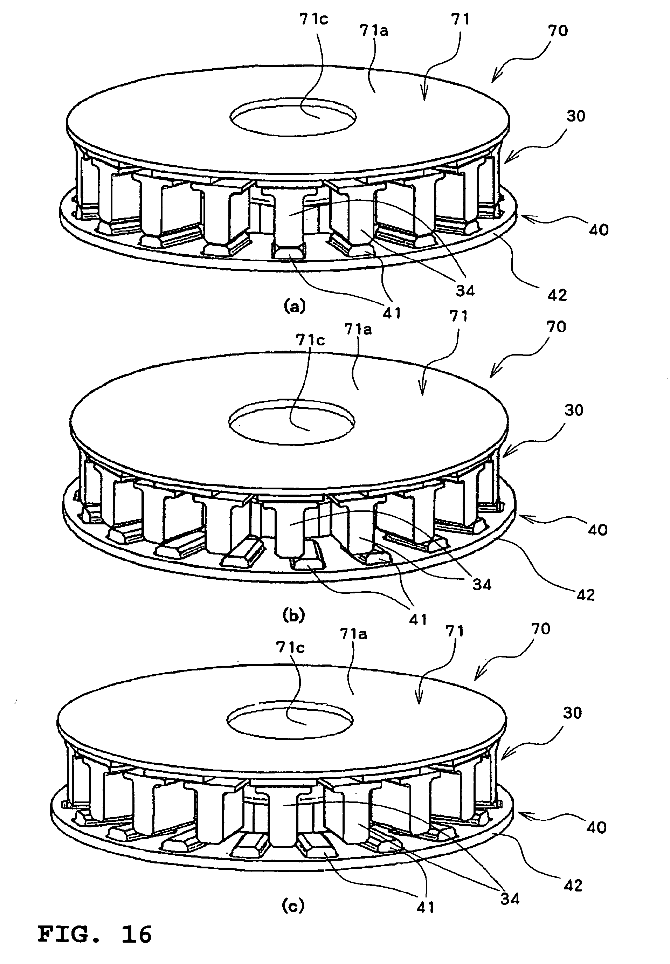

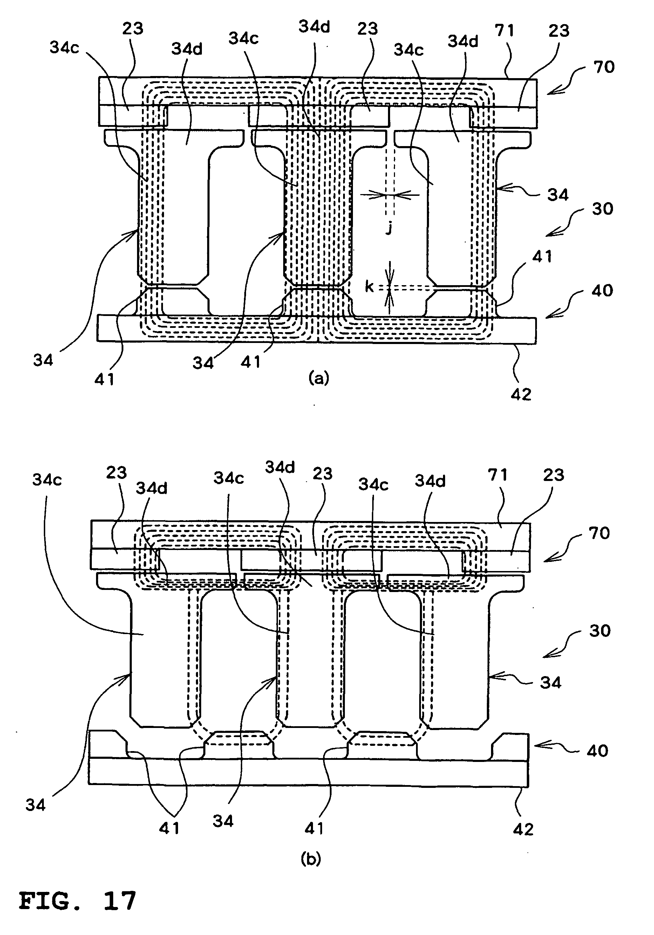

Here, the rotation of the second stator 40 and the resulting changes in the amount of magnetic flux are described. FIG. 16 is a view illustrating how the second stator 40 rotates about the axis of the crankshaft 51, and FIG. 17 is a view illustrating the changes in the amount of magnetic flux. For the sake of explanation, the resin part 36 of the first stator 30, the resin part 43 of the second stator 40 and so on shown in FIG. 3 or FIG. 4 are omitted in these drawings, and the outer cylindrical portion 71 b of the yoke 71 is omitted in FIG. 16.

FIG. 16(a) shows a state in which the second teeth 41 are diametrically opposed to the first teeth 34. In this state, the distance between the end faces 34b of the first teeth 34 on the side of the second teeth 41 and the end faces 41 a of the second teeth 41 on the side of the first teeth 34 has a minimum value k. As described before, the first teeth 34 are so arranged that the distance j between the magnet opposing portions 34d of adjacent first teeth 34 (the gap between the end faces 34e of adjacent magnet opposing portions 34d) is greater than the distance k. Therefore, the magnetic resistance caused by the gap j is greater than the magnetic resistance caused by the gap k. In this case, as shown in FIG. 17(a), most of the magnetic flux formed between adjacent field magnets 23 passes through the coil winding portions 34c of the first teeth 34. Since the magnetic flux flows inside the coils 31, a strong magnetic field is generated.

When the motor 66 is rotated in a forward direction, the second teeth 41 are moved through the intermediate positions shown in FIG. 16(b) to positions in the middle between adjacent first teeth 34 as shown in FIG. 16(c). Then, the gap between the first teeth 34 and the second teeth 41 increases and the magnetic resistance between the first teeth 34 and the second teeth 41 increases. Thus, as shown in FIG. 17(b), most of the magnetic flux generated between adjacent field magnets 23 flows from the magnet opposing portions 34d of the first teeth 34 to the magnet opposing portions 34d of adjacent first teeth 34. Since the magnetic flux does not pass inside the coils 31, a weak magnetic field is generated.

Therefore, the magnetic flux from the field magnets 23 does not flow across the coils 31 (not shown) of the first teeth 34, and the magnetic resistance in the rotating direction of the rotor 70 caused by the magnetic flux flowing across the coils 31 is released. As a result, low-torque high-speed rotation can be achieved.

When the first teeth 34 and the second teeth 41 are diametrically opposed to each other as shown in FIG. 16(a), one end face of the gear engaging portion 45 is in contact with one end face 39a of the cutout 39. When the second teeth 41 are in the middle between adjacent first teeth 34 as shown in FIG. 16(c), the other end face of the gear engaging portion 45 is in contact with the other end face 39b of the cutout 39. That is, the end faces 39a and 39b of the cutout 39 regulate the range through which the second stator 40 can rotate.

According to the stator 25 of the rotary electric machine 20 as described above, the stator 25 includes the second stator 40, and the first stator 30 including the coils 31. The output characteristics of the rotary electric machine 20 change as the second stator 40 rotates. The first stator 30 rotatably supports the second stator 40 against the attractive force between the stators. Accordingly, the distance k between the end faces 34b of the first teeth 34 and the end faces 41 a of the second teeth 41 is set with precision irrespective of the configuration of the case cover 19 or the like, thereby enabling precise control of the output characteristics.

In the stator 25 as described above, the first stator 30 regulates the distance k through direct contact between the contacted part 36k of the first stator 30 and the contacting portion 43e of the second stator 40. However, the first stator 30 may regulate the distance k through indirect contact between the contacted portion 36k and the contacting portion 43e.

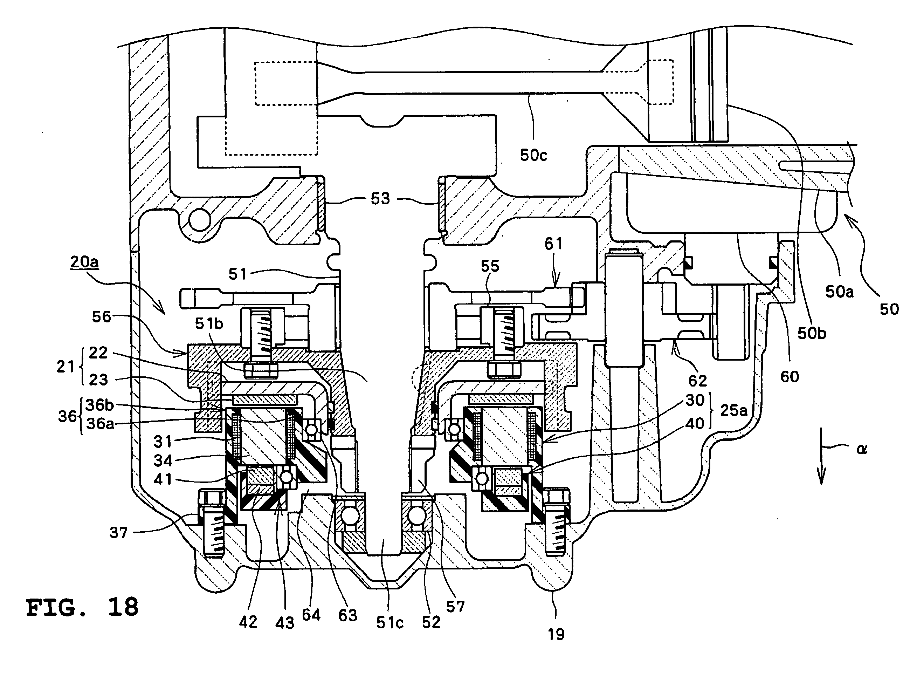

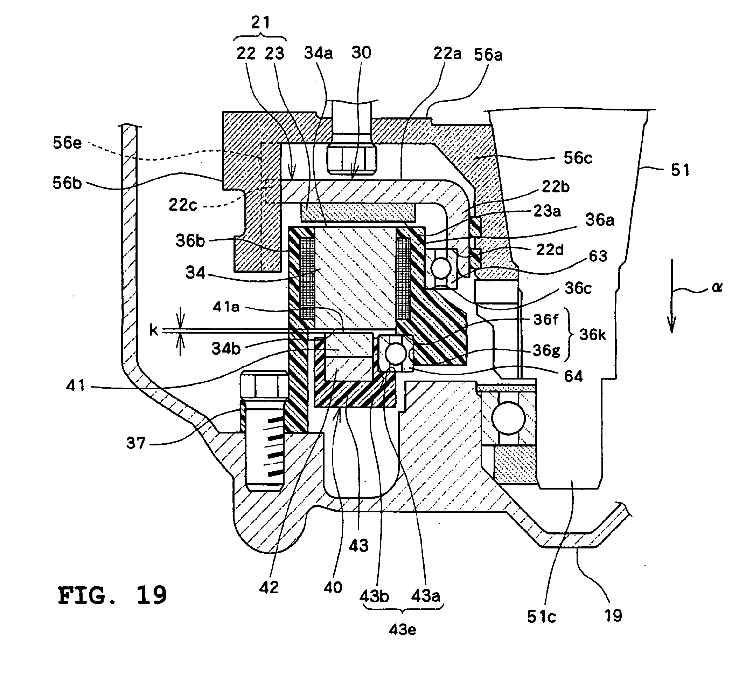

FIG. 18 and FIG. 19 are cross-sectional views of the rotary electric machine 20 including a stator 25a according to this embodiment. FIG. 19 is an enlarged view of FIG. 18. In these drawings, the portions that are the same as those of the rotary electric machine 20a described above are denoted by the same symbols and detailed description thereof is omitted.

The inner peripheral portion 36a of the first stator 30 has a contacted portion 36k on its outside in the vehicle width direction. On the other hand, the resin part 43 of the second stator 40 has a contacting portion 43e formed so as to extend radially inward. A bearing 64 is disposed between the contacted portion 36k and the contacting portion 43e. The first stator 30 rotatably supports the second stator 40 via the bearing 64 while regulating the distance k.

More specifically, the contacted portion 36k has an annular contacted surface 36f perpendicular to the axial direction. The contacted portion 36k also has a cylindrical rotation supporting surface 36g extending outward in the vehicle width direction from the inner periphery of the contacted surface 36f. The contacted surface 36f is located slightly outside a plane including the end faces 34b of the first teeth 34 on the side of the second teeth 41 in the vehicle width direction.

The contacting portion 43e of the second stator 40 has an annular bearing supported surface 43a perpendicular to the axial direction, and a cylindrical rotation supported surface 43b extending inward in the vehicle width direction from the outer periphery of the bearing supported surface 43a.

The bearing 64 is disposed between the contacted surface 36f of the contacted portion 36k and the bearing supported surface 43a of the contacting portion 43e. The contacted surface 36f presses the bearing supported surface 43a outward in the vehicle width direction via the bearing 64, and the first stator 30 restricts the second stator 40 from moving toward the first stator 30 against the magnetic force acting between the second stator 40 and the first stator 30.

The first stator 30 supports the second stator 40 on the outside in the vehicle width direction, thereby ensuring the distance k between the end faces 41 a of the second teeth 41 and the end faces 34b of the first teeth 34. The distance k corresponds to the difference between the distance from the end faces 34b of the first teeth 34 to an end face 64a of the bearing 64 on the side of the second stator 40 and the distance from the end faces 41 a of the second teeth 41 to the bearing supported surface 43a.

The diameter of the rotation supporting surface 36g of the contacted portion 36k is equal to the inside diameter of the bearing 64, and the entire rotation supporting surface 36g is in contact with the inner peripheral surface of the bearing 64. The diameter of the rotation supported surface 43b of the second stator 40 is equal to the diameter of the outer peripheral surface of the bearing 64, and the entire rotation supported surface 43b is in contact with the outer peripheral surface of the bearing 64. Therefore, the first stator 30 rotatably supports the second stator 40 while preventing the second stator 40 from oscillating radially.

Unlike in the rotary electric machine 20 described before, the first stator 30 of the stator 25a shown in FIG. 18 and FIG. 19 is secured to the case cover 19 such that the first stator 30 cannot move in the axial direction and cannot rotate about the axis. More specifically, the outer peripheral portion 36b of the first stator 30 extends outward in the vehicle width direction. A plurality of engaging portions 37 extend radially outward from the edge of the outer peripheral portion 36b. Each of the engaging portions 37 is secured to the case cover 19 by bolts.

The rotor 21 arranged to face the first stator 30 in the axial direction can slide in the axial direction. More specifically, a substantially cup-shaped flywheel 56 that is secured to the one-way clutch 55 is disposed outside the one-way clutch 55 in the vehicle width direction. The flywheel 56 has a disk portion 56a, an outer cylindrical portion 56b, and an inner cylindrical portion 56c. The disk portion 56a has an insertion hole through which the crankshaft 51 is inserted, and the inner cylindrical portion 56c extends outward in the vehicle width direction from the edge of the disk portion 56a. The outer cylindrical portion 56b extends outward in the vehicle width direction from the peripheral edge of the disk portion 56a. A plurality of recesses 56e extending linearly in the axial direction are formed in the inner peripheral surface of the outer cylindrical portion 56b. The yoke 22 of the rotor 21 has a generally disk-like shape and has a disk portion 22a and an inner cylindrical portion 22b. The disk portion 22a has an insertion hole through which the crankshaft 51 is inserted. The inner cylindrical portion 22b extends outward in the vehicle width direction from the peripheral edge of the insertion hole. The disk portion 22a has projections 22c protruding radially outward from the periphery thereof. The number of the projections 22c is the same as the number of the recesses 56e. The projections 22c of the yoke 22 are engaged with the recesses 56e of the flywheel 56 so that the yoke 22 can rotate together with the flywheel 56 and slide In the axial direction.

The rotor 21 is in indirect contact with the first stator 30, whereby the rotor 21. is restricted from moving toward the first stator 30. That is, the inner peripheral portion 36a of the first stator 30 has an annular bearing supporting surface 36c perpendicular to the axial direction. The yoke 22 has an annular bearing supported surface 22d perpendicular to the axial direction and formed on the outer periphery of the inner cylindrical portion 22b. A bearing 63 is disposed between the bearing supporting surface 36c of the first stator 30 and the yoke 22. The yoke 22 is attracted toward the first stator 30 by the magnetic force of the field magnets 23. The contacted surface 36c supports the yoke 22 via the bearing 63 against the magnetic force and restricts the yoke 22 from moving toward the first stator 30.

In the rotary electric machine as described above, the resin part 43 made of a resin is attached to the base 42 of the second stator 40. However, instead of the resin part 43, for example, an annular metal ring may be attached to the base 42 so that the base 42 and the second teeth 41 are secured in place by the metal ring and the contacting portion 43e that contacts the first stator 30 is formed by the metal ring.

### Second Example

Next, a second example, which is not an embodiment of the invention will be described with reference to the drawings.

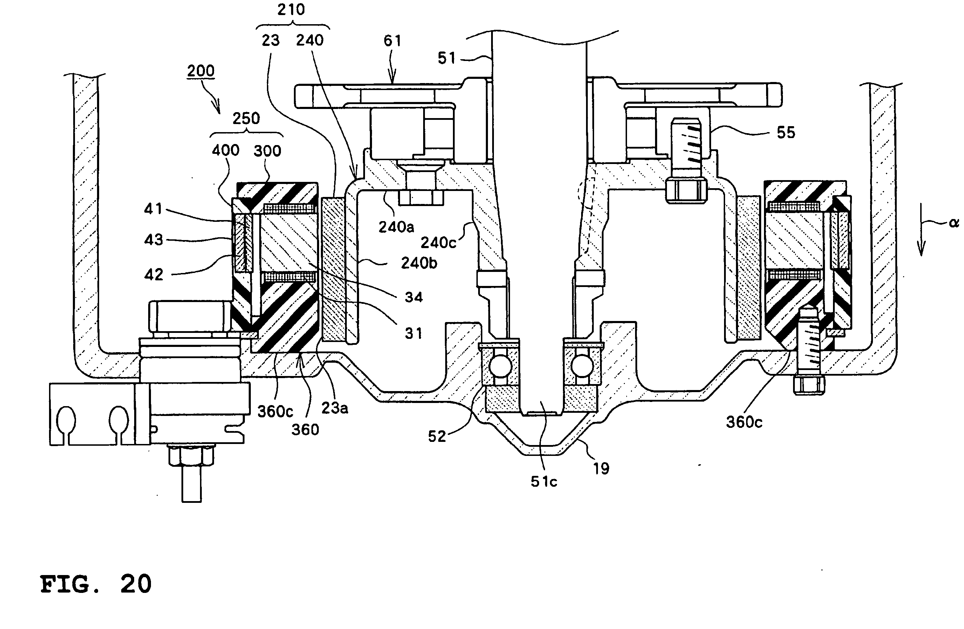

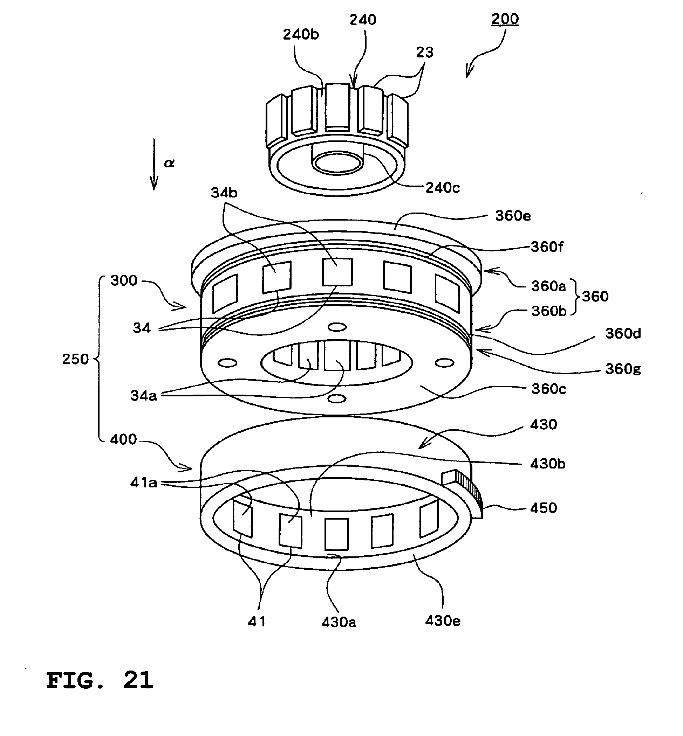

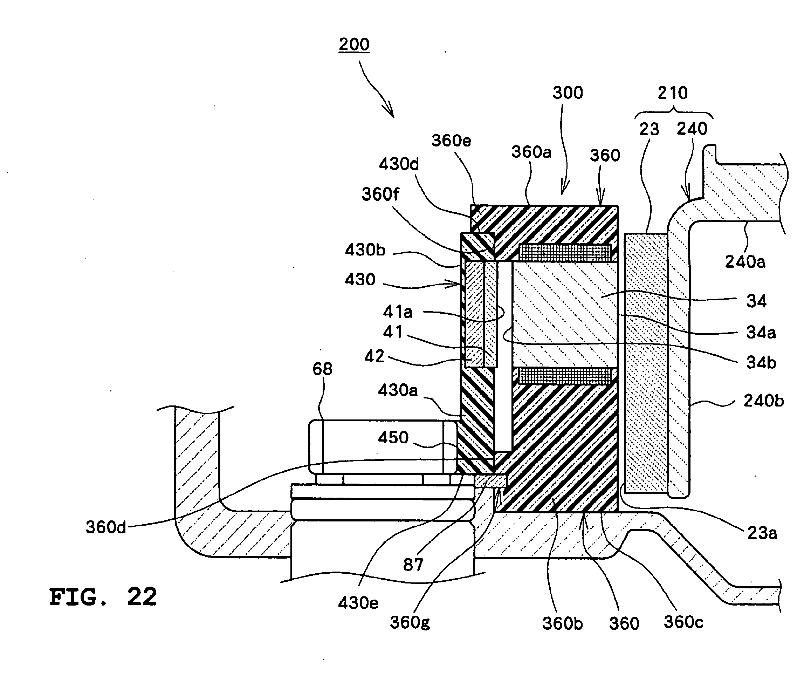

FIG. 20 is a cross-sectional view of a rotary electric machine 200 provided with a stator 250 according to the second example and FIG. 21 is an exploded perspective view of the rotary electric machine 200. FIG. 22 is an enlarged view of FIG. 20. In FIG. 21, the crankshaft 51 is not shown. In FIG. 20, the cylinder 50a located on the proximal side of the crankshaft 51 and so on are omitted. In FIG. 20 and FIG. 21, the same parts as those in the stator 25 and the rotary electric machine 20 equipped with the stator 25 described above are designated by the same reference numerals and their description is omitted.

The rotary electric machine 200 is a radial gap type rotary electric machine, that is, a rotary electric machine of a type in which a stator is located radially inside or outside a rotor so as to face the rotor surrounding a rotating shaft (the crankshaft 51 in this example).

The rotary electric machine 200 has a generally cylindrical rotor 210, and a circular cylindrical stator 250 located radially outside the rotor 210. The rotor 210 has a generally cup-shaped yoke 240 and field magnets 23. The yoke 240 has a disk portion 240a, an outer cylindrical portion 240b, and an inner cylindrical portion 240c, The disk portion 240a has at its center an insertion hole through which the crankshaft 51 is inserted. The inner cylindrical portion 240c extends outward in the vehicle width direction from the edge of the insertion hole. The outer cylindrical portion 240b extends outward in the vehicle width direction from the outer periphery of the disk portion 240a.

As in the case with the yoke 71 of the rotary electric machine 20 described before, the disk portion 240a of the yoke 240 is secured to the one-way clutch 55 by bolts and the yoke 240 is operatively linked with the one-way clutch 55. The field magnets 23 are joined to the outer peripheral surface of the outer cylindrical portion 240b, and end faces 23a of the field magnets 23 are arranged perpendicular to the radial direction.

The circular cylindrical stator 250 is located radially outside the outer cylindrical portion 240b of the yoke 240 so as to surround the outer cylindrical portion 240b. The stator 250 has a circular cylindrical second stator 400, and a circular cylindrical first stator 300 inserted in the second stator 400 in the axial direction.

The stator 250 is described in detail below. The first stator 300 is first described. The first stator 300 has a plurality of first teeth 34, and coils 31 wound around the first teeth 34. The plurality of first teeth 34 are arranged in a circle around the axis of the crankshaft 51 and radially opposed to the field magnets 23. The first teeth 34 and the coils 31 are molded by a resin part 360 made of a resin containing a lubricant. The first stator 300 has a circular cylindrical shape as a whole. Like the first teeth 34 of the stator 25 described before, each of the first teeth 34 of the first stator 300 has a magnet opposing portion 34d having an end face 34a facing the field magnets 23 and larger in size than an end face 34b on the opposite side. The end faces 34a and 34b of the first teeth 34 are curved in conformity with the inner and outer peripheral surfaces of the circular cylindrical first stator 300.

The resin part 360 has a disk-shaped inner disk portion 360a located inside the first teeth 34 and the coils 31 in the vehicle width direction, and a circular cylindrical outer circular cylindrical portion 360b located outside in the vehicle width direction. An end face 360c of the outer circular cylindrical portion 360b on the outside in the vehicle width direction is in contact with the inner wall of the case cover 19. The end face 360c has a plurality of bolt holes. The case cover 19 has through holes at positions corresponding to the bolt holes of the outer circular cylindrical portion 360b. Bolts are inserted in the through holes and the bolt holes corresponding to each other, and the first stator 300 is secured to the case cover 19 by the bolts so that the first stator 300 cannot move in the axial direction and cannot rotate about the axis.

An outer peripheral surface (outer rotation supporting surface) 360d of the outer circular cylindrical portion 360b on the outside in the vehicle width direction is larger in diameter than an outer peripheral surface including the end faces 34b of the first teeth 34. A groove-like recess 360g is circumferentially formed in the outer rotation supporting surface 360d. A C-shaped circlip 87 is fitted in the recess 360g to restrict the second stator 400 from moving in the axial direction. Detailed description about how the movement of the second stator 400 in the axial direction is restricted will be made later.

An annular stopper portion 360e extends radially outward from an end of the inner disk portion 360a located outside in the vehicle width direction. An outer peripheral surface (inner rotation supporting surface) 360f with a diameter greater than that of the outer peripheral surface including the end faces 34b of the first teeth 34 is formed inside the stopper portion 360e in the vehicle width direction (the side where the first teeth 34 are buried). The diameter of the inner rotation supporting surface 360f is equal to the diameter of the outer rotation supporting surface 360d of the outer circular cylindrical portion 360b. The inner rotation supporting surface 360f and the outer rotation supporting surface 360d rotatably support the second stator 40. This will be described later in detail.

The second stator 400 is next described. The second stator 400 has a plurality of second teeth 41 and a circular cylindrical base 42. The plurality of second teeth 41 are arranged in a circle around the crankshaft 51 and radially opposed to the end faces 34b of the first teeth 34. The base 42 retains the plurality of second teeth 41. The second teeth 41 and the base 42 are molded by a resin part 430 made of a resin containing a lubricant.

The resin part 430 of the second stator 400 is in contact with the first stator 300, whereby the second stator 400 is supported by the first stator 300 so as to be rotatable about the axis of the crankshaft 51. More specifically, the resin part 430 has an annular outer supported portion 430a and an annular inner supported portion 430b. The outer supported portion 430a is located outside the second teeth 41 in the vehicle width direction, and the inner supported portion 430b is located inside the second teeth 41 in the vehicle width direction. The inside diameter of the outer supported portion 430a is equal to the inside diameter of the inner supported portion 430b and corresponds to the diameter of the outer rotation supporting surface 360d of the first stator 300. The inside diameter of the inner supported portion 430b corresponds to the diameter of the inner rotation supporting surface 360f of the first stator 300. The entire inner peripheral surface of an end of the outer supported portion 430a is in contact with the outer rotation supporting surface 360d of the first stator 300, and the entire inner peripheral surface of an end of the inner supported portion 430b is in contact with the inner rotation supporting surface 360f of the first stator 300. The second stator 400 is thereby supported by the first stator 300 so as to be rotatable about the axis of the crankshaft 51.

The distance between the end faces 34b of the first teeth 34 and the end faces 41 a of the second teeth is defined as the difference between the diameter of the outer rotation supporting surface 360d and the inner rotation supporting surface 360f and the diameter of the outer peripheral surface including the end faces 34b of the first teeth 34.

The second stator 400 contacts the first stator 300 in the axial direction, whereby the movement of the second stator 400 in the axial direction is restricted. More specifically, an end face 430d of the second stator 400 located inside in the vehicle width direction is in contact with the stopper portion 360e of the first stator 300, whereby the second stator 400 is restricted from moving inward in the vehicle width direction. The outer rotation supporting surface 360d of the first stator 300 has the above-mentioned groove-like recess 360g formed at the portion where an end face 430e of the second stator 400 on the outside in the vehicle width direction is located. A circlip 87 is fitted in the recess 360g. The periphery of the circlip 87 protruding radially outward from the outer peripheral surface of the outer rotation supporting surface 360d is in contact with the end face 430e of the second stator 400 to thereby restrict the second stator 400 from moving outward in the vehicle width direction.

A gear engaging portion 450 protrudes radially outward from an end of the outer supported portion 430a of the resin part 430. As is the case with the stator 25 described before, the gear 68 is in meshing engagement with the gear engaging portion 450. The second stator 400 is rotated in forward or reverse as the motor 66 rotates in forward or reverse.

According to the stator 250 described above, the stator 250 has the second stator 400 and the first stator 300 equipped with the coils 31, and the output characteristics of the rotary electric machine 200 varies as the second stator 400 rotates. The first stator 300 has the cylindrical rotation supporting surfaces 360d and 360f in contact with the second stator 400. The first stator 300 rotatably supports the second teeth 41 while preventing the second teeth 41 from oscillating radially to ensure precise distance between the first teeth 340 and the second teeth 41, thereby allowing precise control of the output characteristics.

In the case of the stator 250 described above, the circular cylindrical stator 250 is located radially outside the rotor 210. However, the position where the stator is located is not limited to the above example. For example, the stator may be located radially inside the rotor.

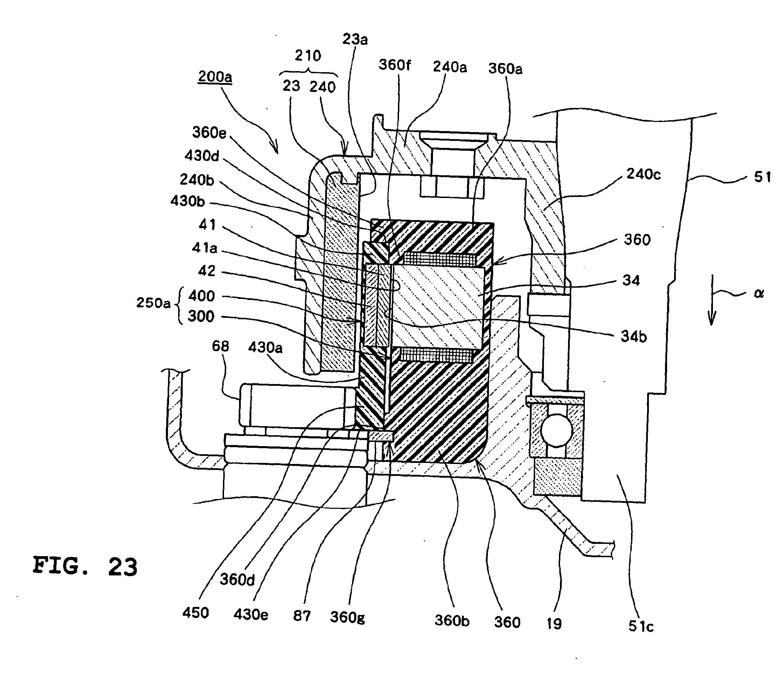

FIG. 23 is a sectional view of a rotary electric machine 200a equipped with a stator 250a according to this example. In FIG. 23, only one side of the rotary electric machine 200a is shown. In the rotary electric machine 200a, the stator 250a is located radially inside the outer cylindrical portion 240b of the yoke 240. The second stator 400 is radially opposed to the field magnets 23. The first stator 300 has an outer peripheral surface with a diameter smaller than the inside diameter of the second stator 400. The first stator 300 is located inside (radially inward from) the second stator 400. In the rotary electric machine 200a, the inner peripheral surface of the first stator 300 is in contact with the outer peripheral surface of the cylindrical portion 19a of the case cover 19. Therefore, the supporting strength for the first stator 300 is increased.

In the stators 250 and 250a described above, the first stator 300 is secured to the case cover 19 located outside the rotary electric machine 200 in the vehicle width direction. However, the fixing position of the first stator is not limited to this; for example, the first stator may be secured to a crankcase located inside the first stator in the vehicle width direction.

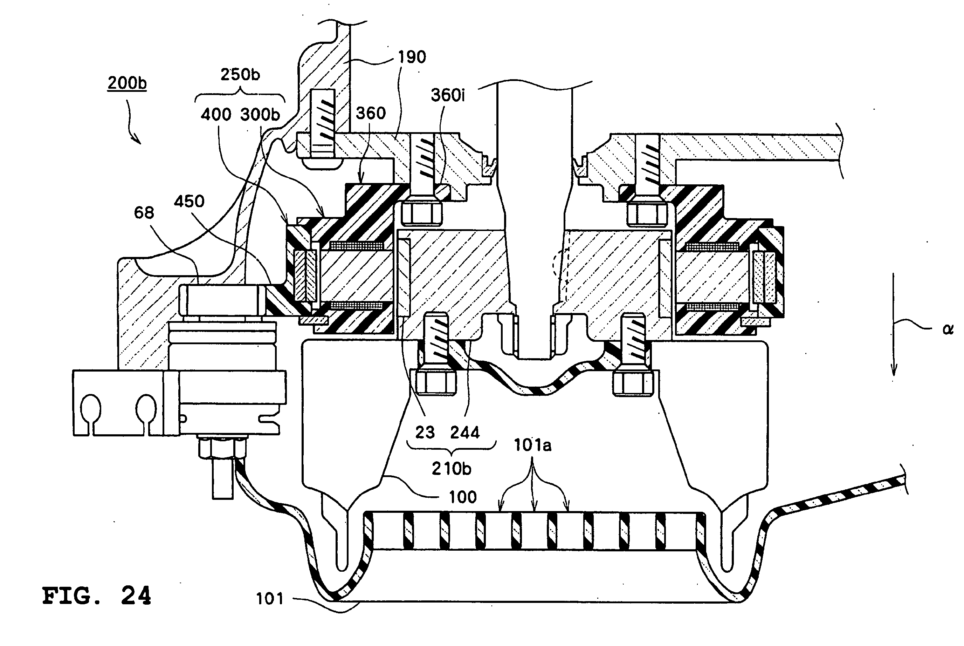

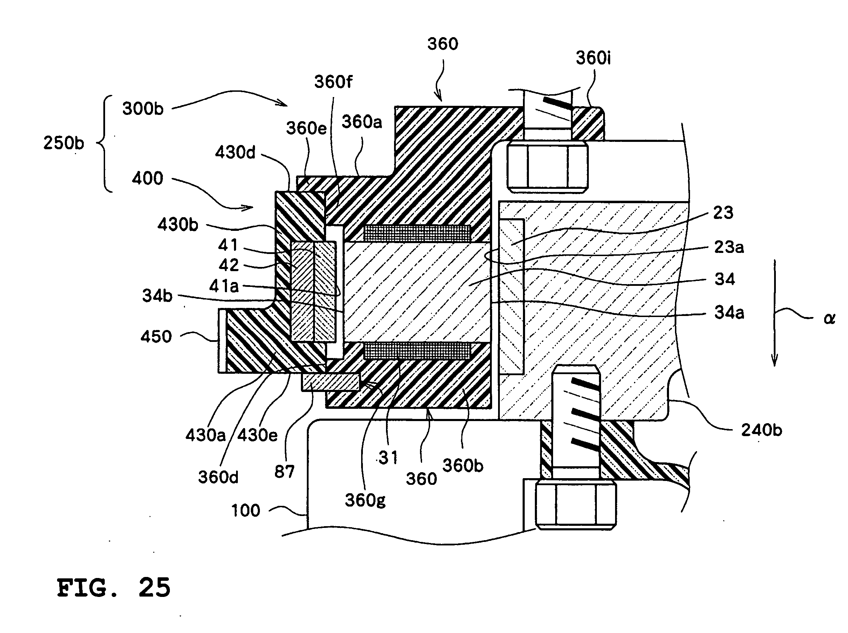

FIG. 24 is a cross-sectional view of a rotary electric machine 200b equipped with a stator 250b according to this example, and FIG. 25 is an enlarged view of the stator 250b. As shown in FIG. 24, a crankcase 190 is provided inside the rotary electric machine 200b in the vehicle width direction. A first stator 300b is attached to the crankcase 190, More specifically, a resin part 360 of the first stator 300b has a plurality of engaging portions 360i extending radially inward inside the first teeth 34 and the coils 31 in the vehicle width direction. Each of the engaging portions 360i has a through hole. The crankcase 190 has positioning bolt holes at positions corresponding to the engaging portions 360i, Bolts are inserted in the bolt holes and the through holes corresponding to each other. The first stator 300 is secured to the crankcase 190.

The rotary electric machine 200b has a circular cylindrical yoke 244, and the crankshaft 51 is inserted through the center thereof. The field magnets 23 are buried in the outer peripheral surface of the yoke 244. The yoke 244 is thus increased in weight so that it also functions as a flywheel. Air cooling fins 100 are attached to the outside of the yoke 244 in the vehicle width direction. A case 101 made of a resin is located outside the air cooling fins 100 in the vehicle width direction. The case 101 has a plurality of air circulation holes 101a located outside the air cooling fins 100 in the vehicle width direction. The air cooling fins 100 rotate together with a rotor 210b and introduce air outside the rotary electric machine 200b into the rotary electric machine 200b to cool the rotary electric machine 200b. The crankshaft 61 is rotatably supported by a bearing (not shown) located inside the crankcase 190.

In the stator described above, the first stator 300 and the second stator 400 are in direct contact with each other. The first stator 300, however, may rotatably support the second stator 400 via a bearing interposed between the inner peripheral surface of the second stator 400 and the outer peripheral surface of the first stator 300, for example.

### Third Example

Next, a third example which is not an embodiment of the invention will be described with reference to the drawings.

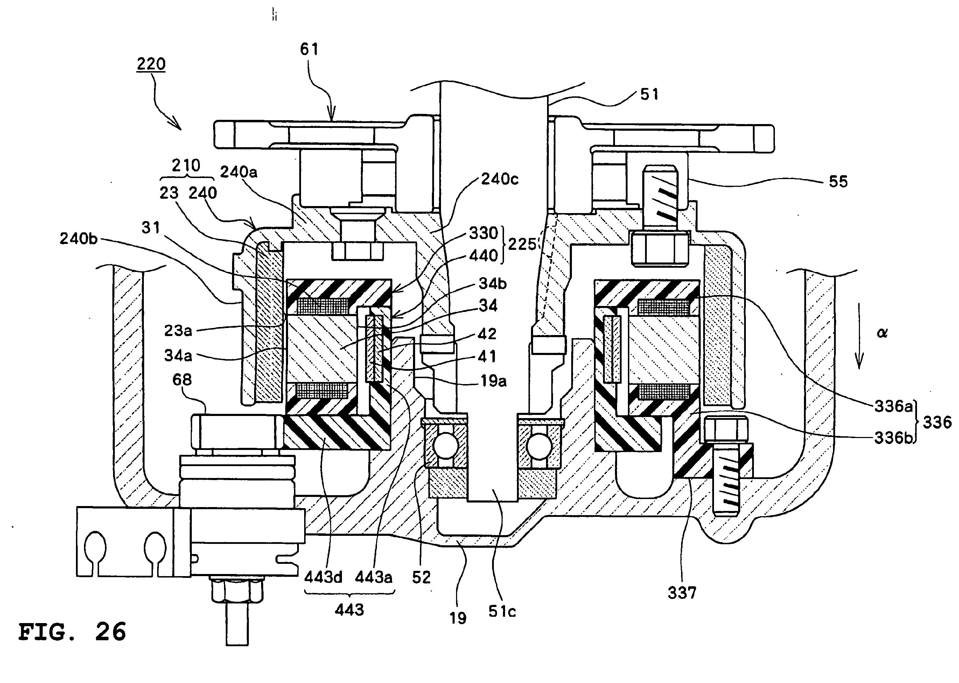

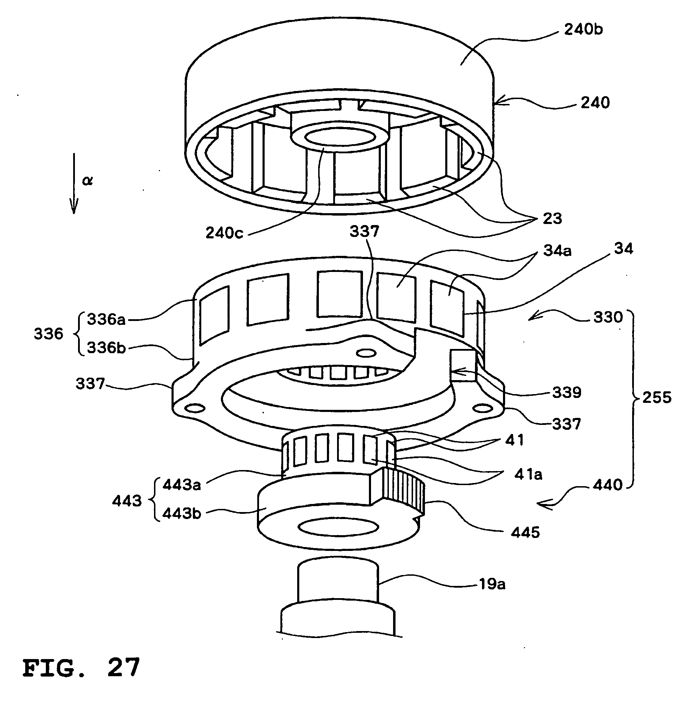

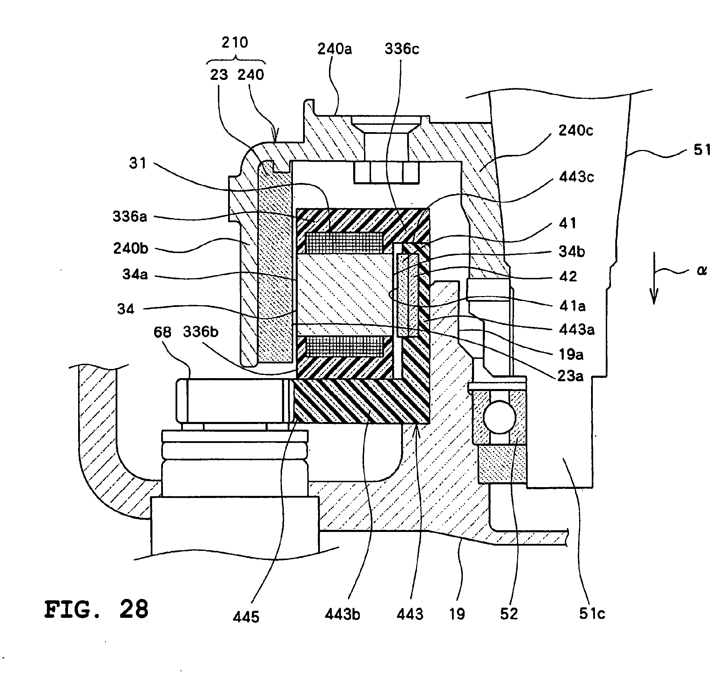

FIG. 26 is a cross-sectional view of a rotary electric machine 220 equipped with a stator 225 according to the third example, and FIG. 27 is an exploded perspective view of the rotary electric motor 220. FIG. 28 is an enlarged view of the stator 225 shown in FIG. 26. The cylinder 50a located on the proximal side of the crankshaft 51 and so on are omitted in FIG. 26. In FIG. 26 to FIG. 28, the same parts as those in the rotary electric machine 200 described above are designated by the same reference numerals and their description is omitted.

Although the rotary electric machine 220 is of generally the same construction as the radial gap type rotary electric machine described above, its characteristic feature resides in that the stator 225 has a first stator 330 and a second stator 440, and that the second stator 440 has a generally circular cylindrical shape smaller in diameter than the first stator 330 and is rotatably supported by the case cover 19.

The stator 225 is described in detail below. First, the first stator 330 is described. The first stator 330 has a plurality of first teeth 34 radially opposed to the field magnets 23, and coils 31 wound around the first teeth 34. The plurality of first teeth 34 are arranged in a circle around the axis of the crankshaft 51. The first teeth 34 and the coils 31 are molded by a resin part 336 made of a resin containing a lubricant.

The resin part 336 has a disk-shaped inner resin portion 336a inside the first teeth 34 and the coils 31 in the vehicle width direction, and a generally disk-shaped outer resin portion 336b outside the first teeth 34 and the coils 31 in the vehicle width direction.

The outer resin portion 336b extends outward in the vehicle width direction and has a plurality of engaging portions 337 protruding radially outward from the edge thereof. Each of the engaging portions 337 has a bolt hole. End faces of the engaging portions 337 are in contact with the case cover 19, and the case cover 19 has through holes at positions corresponding to the engaging portions 337. Bolts are inserted in the through holes and the bolt holes corresponding to each other. The first stator 330 is secured to the case cover 19 so that the first stator 330 cannot move in the axial direction and the radial direction. The part of the outer resin part 336b between two adjacent engaging portions 337 is cut out, and a cutout 339 is formed in the first stator 330. A gear engaging portion 445 of the second stator 440 protrudes radially outward through the cutout 339. The gear engaging portion 445 is described in detail later.

The inner resin portion 336a has an annular stopper portion 336c projecting radially inward and having a diameter smaller than that of an inner peripheral surface of the end faces 34b radially inside the first teeth 34. An end of the second stator 440 is in contact with the stopper portion 336c, restricting the movement of the second stator 440 in the axial direction. Detailed description about how the stopper portion 336c restricts the movement of the second stator 440 in the axial direction is made later.

Next, the second stator 440 is described. The second stator 440 has a plurality of second teeth 41 radially opposed to the first teeth 34, and a circular cylindrical base 42 for supporting the second teeth 41 in an annular configuration. The second teeth 41 and the base 42 are molded by a resin part 443 made of a resin containing a lubricant. The resin part 443 has a cylindrical resin portion 443a extending in the axial direction and a disk-shaped resin portion 443b having a disk-like shape and extending radially outward from the edge of the cylindrical resin portion 443a on the outside in the vehicle width direction.

The cylindrical resin part 443a of the second stator 440 is in contact with a cylindrical portion 19a of the case cover 19, whereby the second stator 440 is rotatably supported by the case cover 19. That is, as described above, the cylindrical portion 19a extends in the axial direction of the crankshaft 51 and is formed in a circular cylindrical configuration. The diameter of the outer peripheral surface (rotation supporting surface) of the cylindrical portion 19a and the diameter of the inner peripheral surface of the cylindrical resin portion 443a are equal to each other, and the entire inner peripheral surface of the cylindrical resin portion 443a is in contact with the outer peripheral surface of the cylindrical portion 19a. The second stator 440 is thus supported in place so as to be rotatable about the axis of the crankshaft 51 while being restricted from oscillating radially.

In the rotary electric machine 220, the first stator 330 is secured to the case cover 19, and the distance between the end faces 34b of the first teeth 34 on the side of the second teeth and the end faces 41 a of the second teeth 41 on the side of the first teeth 34 is determined in accordance with the thickness of the cylindrical resin portion 443a.

An end 443c of the cylindrical resin portion 443a on the inside in the vehicle width direction is in contact with the stopper portion 336c of the first stator 330. Therefore, the second stator 440 is restricted from moving in the axial direction.

The disk-shaped resin portion 443b has a gear engaging portion 445 extending radially outward. The gear engaging portion 445 protrudes radially outward through the cutout 339 of the first stator 330 and is in meshing engagement with the gear 68. The second stator 440 is rotated in forward or reverse as the motor 66 rotates in forward or reverse.

According to the stator 225 of the rotary electric machine 220 described above, the stator 225 has the second stator 440 and the first stator 330 equipped with the coils 31, and the output characteristics of the rotary electric machine 220 can be changed by rotating the second stator 440. The first stator 330 is secured to the case cover 19, and the entire inner peripheral surface of the second stator 440 is in contact with the outer peripheral surface of the cylindrical portion 19a of the case cover 19. Therefore, the second teeth 41 cannot be oscillated radially, thereby enabling precise control of the output characteristics.

In the stator 225 described above, the second stator 440 is in direct contact with the outer peripheral surface of the cylindrical portion 19a. The second stator 440, however, may be rotatably supported via a bearing interposed between the inner peripheral surface of the second stator 440 and the cylindrical portion 19a.

The description above discloses for the purpose of solving the above problem, an embodiment of a stator for a rotary electric machine, which is a stator for an axial gap type rotary electric machine which is opposed to a rotor in a direction of an axis of a rotating shaft, including: an annular first stator having a plurality of first teeth arranged in an annular shape surrounding the axis; and an annular second stator having a plurality of second teeth arranged in an annular shape surrounding the axis and opposed to the plurality of first teeth in the direction of the axis, the second stator being attracted toward the first stator by a magnetic force and rotatable about the axis, in which: a coil is wound around each of the plurality of first teeth; and the first stator has a contacted surface with which the second stator is in direct or indirect contact, regulating a distance in the direction of the axis between a surface of the first stator which faces the second stator and in which the plurality of first teeth are buried, and a surface of the second stator which faces the first stator and in which the plurality of second teeth are buried.

According to the present embodiment, the stator includes the second stator and the first stator that is equipped with the coil. As the second stator rotates about the axis, the amount of magnetic flux flowing in the first teeth of the first stator changes, thereby making it possible to change the output characteristics of the rotary electric machine. The distance between the second stator and the first stator is regulated by the first stator. Accordingly, the distance can be set with precision irrespective of variations or errors in the shape of a member or the like to which the stator is attached. The output characteristics of the rotary electric machine can be thus controlled with precision. The second stator is attracted toward the first stator by the magnetic force generated by the passage of current through the coil of the first stator.

Here, the distance of the first stator from the second stator may be regulated so that the distance between the opposing surfaces becomes zero, that is, so that the surface of the first stator facing the second stator is in contact with the surface of the second stator facing the first stator. The first stator may be regulated to make the distance constant, or to make the distance vary within a predetermined range following the rotation of the second stator.

In a further embodiment, the second stator has a circular cylindrical inner or outer peripheral surface centered around the axis, and the first stator has a cylindrical rotation supporting surface centered around the axis and in direct or indirect contact with the inner or outer peripheral surface of the second stator, and supports the second stator so as to be rotatable about the axis. In this embodiment, the output characteristics of the rotary electric machine can be changed by changing the amount of magnetic flux flowing in the first teeth of the first stator. It is possible to ensure precise distance irrespective of variations or errors in the shape of a member or the like to which the stator is attached.

For the purpose of providing a better understanding of the invention, an example, a stator for a rotary electric machine is disclosed, which is a stator for a radial gap type rotary electric machine which is opposed to a rotor surrounding a rotating shaft and is located outside or inside the rotor in a radial direction of the rotating shaft, including: a first stator having a plurality of first teeth arranged in an annular shape surrounding an axis of the rotating shaft and having cylindrical outer and inner peripheral surfaces centered around the axis; and a second stator having a plurality of second teeth arranged an annular shape surrounding the axis and having cylindrical outer and inner peripheral surfaces centered around the axis, the second teeth being radially opposed to the first teeth, in which: a coil is wound around each of the plurality of first teeth; the inner peripheral surface of one of the first stator and the second stator is formed larger in diameter than the outer peripheral surface of the other of the first stator and the second stator the other of the first stator and the second stator is inserted into the one of the first stator and the second stator and the first stator supports the second stator so as to be rotatable about the axis.

According to this example, the stator includes the second stator and the first stator that is equipped with the coil. As the second stator rotates about the axis, the amount of magnetic flux flowing in the first teeth of the first stator varies, thereby making it possible to change the output characteristics of the rotary electric machine. The second teeth are arranged in a circle around the same axis around which the first teeth are arranged, whereby the relative positions of the second teeth and the first teeth can be changed with precision, allowing precise control of the output characteristics. Here, a construction may be adopted in which the inner peripheral surface of one of the first stator and the second stator is formed slightly larger in diameter than the outer peripheral surface of the other, and the inner peripheral surface of the one of the stators is in contact with the outer peripheral surface of the other.

In a further example, one of the outer and inner peripheral surfaces of the first stator is radially opposed to the second stator, a cylindrical rotation supporting surface centered around the axis is formed on the one of the outer and inner peripheral surfaces of the first stator, the rotation supporting surface is in direct or indirect contact with the second stator. This embodiment allows the output characteristics of the rotary electric machine to be changed. This embodiment also enables precise control of the output characteristics.

For the purpose of providing a better understanding of the invention, an example, a stator for a rotary electric machine Is disclosed, which is a stator for a radial gap type rotary electric machine which is opposed to a rotor surrounding a rotating shaft and is located outside or inside the rotor in a radial direction of the rotating shaft, including: a first stator having a plurality of first teeth arranged in an annular shape surrounding an axis of the rotating shaft and having cylindrical outer and inner peripheral surfaces centered around the axis; and a second stator having a plurality of second teeth arranged in an annular shape surrounding the axis and having cylindrical outer and inner peripheral surfaces centered around the axis, the second teeth being radially opposed to the first teeth, in which: a coil is wound around each of the plurality of first teeth; the inner peripheral surface of one of the first stator and the second stator is formed larger in diameter than the outer peripheral surface of the other of the first stator and the second stator, the other of the first stator and the second stator is inserted into the one of the first stator and the second stator, and the first stator is fixed to a fixed member, and the second stator is supported by a circular cylindrical portion so as to be rotatable around the axis, the circular cylindrical portion being formed in the fixed member and centered around the axis.

According to this example, the stator includes the second stator and the first stator that is equipped with the coil. As the second stator rotates about the axis, the amount of magnetic flux flowing in the first teeth of the first stator varies, thereby making it possible to change the output characteristics of the rotary electric machine. The second teeth are rotatably supported on the cylindrical portion of the fixed member, whereby the second stator can be rotated on the same trajectory to achieve precise control of the output characteristics.

Here, examples of the fixed member include a case covering the rotary electric machine, a crankcase, a driving force transmitting mechanism extending from an engine to a rear wheel (for example, a case covering a chain, a belt or a shaft).

In a further embodiment, the inner or outer peripheral surface of the second stator is in direct or indirect contact with a cylindrical rotation supporting surface formed in the cylindrical portion of the fixed member. This embodiment allows the output characteristics of the rotary electric machine to be changed with precision.

A rotary electric machine according to the present embodiments includes one of the stators of the present invention as described above. The present embodiments realize a rotary electric machine that allows the output characteristics to be changed as well as precise control of the output characteristics.

An engine according to the present embodiments is coupled to a rotary electric machine including one of the stators of the present invention as described above. According to the present embodiments, the output characteristics of the rotary electric machine can be changed with precision, whereby engine power-assisting control can be executed over a wide range. Precise assist control can also be performed. The description "the rotary electric machine is coupled to the engine" refers to cases when the crankshaft serves as the output shaft of the rotary electric machine or when a rotating shaft arranged in a driving force transmitting path from the engine to the rear wheel serves as the output shaft of the rotary electric machine.

A vehicle according to the present embodiments incorporate a rotary electric machine including one of the stators of the present invention as described above. According to the present embodiments, the output characteristics of the rotary electric machine can be changed with precision, thereby enabling precise control of vehicle running. Examples of the vehicle include a motorcycle (power-assisted bicycle (motorbike) or scooter), a four-wheeled buggy (all terrain vehicle), a snowmobile, and a two to four passenger four-wheeled buggy (all terrain vehicle).

According to a preferred first aspect, there is disclosed an embodiment of a stator for an axial gap type rotary electric machine which is opposed to a rotor in a direction of an axis of a rotating shaft, comprising: an annular first stator having a plurality of first teeth arranged in an annular shape surrounding the axis; and an annular second stator having a plurality of second teeth arranged in an annular shape surrounding the axis and opposed to the plurality of first teeth in the direction of the axis, the second stator being attracted toward the first stator by a magnetic force and rotatable about the axis, wherein: a coil is wound around each of the plurality of first teeth; and the first stator has a contacted surface with which the second stator is in direct or indirect contact, regulating a distance in the direction of the axis between a surface of the first stator which faces the second stator and in which the plurality of first teeth are buried, and a surface of the second stator which faces the first stator and in which the plurality of second teeth are buried.

Further preferably, according to a second aspect, the second stator has a circular cylindrical inner or outer peripheral surface centered around the axis; and the first stator has a cylindrical rotation supporting surface centered around the axis and in direct or indirect contact with the inner or outer peripheral surface of the second stator, and supports the second stator so as to be rotatable about the axis.

According to an example which is not an embodiment of the invention, there is disclosed an embodiment of a stator for a radial gap type rotary electric machine which is opposed to a rotor surrounding a rotating shaft and is located outside or inside the rotor In a radial direction of the rotating shaft, comprising: a first stator having a plurality of first teeth arranged in an annular shape surrounding an axis of the rotating shaft and having cylindrical outer and inner peripheral surfaces centered around the axis; and a second stator having a plurality of second teeth arranged an annular shape surrounding the axis and having cylindrical outer and inner peripheral surfaces centered around the axis, the second teeth being radially opposed to the first teeth, wherein: a coil is wound around each of the plurality of first teeth; the inner peripheral surface of one of the first stator and the second stator is formed larger in diameter than the outer peripheral surface of the other of the first stator and the second stator; the other of the first stator and the second stator is inserted into the one of the first

stator and the second stator: and the first stator supports the second stator so as to be rotatable about the axis.

Further preferably, according to a fourth example, one of the outer and inner peripheral surfaces of the first stator is radially opposed to the second stator, a cylindrical rotation supporting surface centered around the axis is formed on the one of the outer and inner peripheral surfaces of the first stator; and the rotation supporting surface is in direct or indirect contact with the second stator.

According to an example which is not an embodiment of the invention, there is disclosed an embodiment of a stator for a radial gap type rotary electric machine which is opposed to a rotor surrounding a rotating shaft and is located outside or inside the rotor in a radial direction of the rotating shaft, comprising: a first stator having a plurality of first teeth arranged in an annular shape surrounding an axis of the rotating shaft and having cylindrical outer and inner peripheral surfaces centered around the axis; and a second stator having a plurality of second teeth arranged in an annular shape surrounding the axis and having cylindrical outer and inner peripheral surfaces centered around the axis, the second teeth being radially opposed to the first teeth, wherein: a coil is wound around each of the plurality of first teeth: the inner peripheral surface of one of the first stator and the second stator is formed larger in diameter than the outer peripheral surface of the other of the first stator and the second stator; the other of the first stator and the second stator is inserted into the one of the first stator and the second stator, and the first stator is fixed to a fixed member, and the second stator is supported by a circular cylindrical portion so as to be rotatable around the axis, the circular cylindrical portion being formed in the fixed member and centered around the axis.

Further preferably, according to a sixth example, the inner or outer peripheral surface of the second stator is in direct or indirect contact with a cylindrical rotation supporting surface formed in the cylindrical portion of the fixed member.

According to a preferred seventh aspect, there is disclosed a rotary electric machine comprising the stator according to one of the above aspects.

According to a preferred eighth aspect, there is disclosed an engine which is coupled to a rotary electric machine including the stator according to one of the above aspects.

According to a preferred ninth aspect, there is disclosed a vehicle comprising a rotary electric machine including the stator according to one of the above aspects.

According to a particularly preferred embodiment disclosed above, in order to provide a stator of a rotary electric machine with precisely controllable output characteristics, there is disclosed a stator 25 of an axial gap type rotary electric machine includes an annular first stator 30 having a plurality of teeth 34 arranged in a circle around the axis of a crankshaft 51, and an annular second stator 40 having a plurality of second teeth 41 facing the first teeth 34 along the axial direction, attracted toward the first stator 30 by magnetic force and rotatable about the axis. A coil 31 is wound around each of the plurality of first teeth 41. The first stator 30 has a contacted surface 36h in contact with the second stator 40, and regulates the axial distance k between the surface of the first stator 30 facing the second stator 40 and the surface of the second stator 40 facing the first stator 30.

As discussed above, it is the object to provide a stator of a rotary electric machine with precisely controllable output characteristics by changing the amount of magnetic flux, and a rotary electric machine, an engine and a vehicle having such a stator.

In order to solve the object, one of the present embodiments provides a stator according to claim 1. Such a stator of an axial gap type rotary electric machine facing a rotor along a direction of an axis of a rotating shaft, including: an annular first stator having a plurality of first teeth arranged in a circle around the axis: and an annular second stator having a plurality of second teeth arranged in a circle around the axis and facing the first teeth along the axial direction, attracted toward the first stator by magnetic force and rotatable about the axis, in which a coil is wound around each of the plurality of first teeth, and in which the first stator has a contacted surface in direct or indirect contact with the second stator, and regulates an axial distance between a surface of the first stator facing the second stator and in which the plurality of first teeth are buried and a surface of the second stator facing the first stator and in which the plurality of second teeth are buried.

According to this present embodiment, the stator includes a second stator and a first stator having coils, and the amount of magnetic flux flowing through the first teeth of the first stator and hence the output characteristics of the rotary electric machine can be changed by rotating the second stator around the axis. Since the distance between the second stator and the first stator is regulated by the first stator, the distance can be precisely established without the influence of deformation or tolerance in shape of the member to which the stator is attached, thereby precisely controlling the output characteristics of the rotary electric machine. The second stator is attracted toward the first stator by the magnetic force generated by supplying a current to the coils of the first stator.

The first stator may regulate the distance between the surfaces facing each other to zero, that is, the facing surface of the first stator may be in contact with that of the second stator. In addition, the first stator may not only regulate the distance to a constant value, but also change the distance, for example within a predetermined range as the second stator is rotated.

In a further embodiment, the second stator has a circular cylindrical inner or outer peripheral surface located around the axis, and the first stator has a cylindrical rotation supporting surface in direct or indirect contact with the inner or outer peripheral surface of the second stator and located around the axis, and rotatably supports the second stator around the axis. In this embodiment, the amount of magnetic flux flowing through the first teeth of the first stator and hence the output characteristics of the rotary electric machine can be changed. In addition, the distance can be precisely established without the influence of deformation or tolerance in shape of the member to which the stator is attached.

An example of a stator which is not an embodiment of the invention, but is useful for understanding the invention, is a stator for a radial gap type rotary electric machine located radially outside or inside a rotating shaft and facing a rotor located around the rotating shaft, including: a first stator having a plurality of first teeth arranged in a circle around an axis of the rotating shaft, and a cylindrical outer peripheral surface and a cylindrical inner peripheral surface located around the axis; and a second stator having a plurality of second teeth arranged in a circle around the axis and radially facing the first teeth, and a cylindrical outer peripheral surface and a cylindrical inner peripheral surface located around the axis, in which a coil is wound around each of the plurality of first teeth, in which the inner peripheral surface of one of the first stator or the second stator is larger in diameter than the outer peripheral surface of the other, in which the other is inserted in the one, and in which the first stator rotatably supports the second stator around the axis.

According to this example, the stator includes a second stator and a first stator having coils, and the amount of magnetic flux flowing through the first teeth of the first stator and hence the output characteristics of the rotary electric machine can be changed by rotating the second stator around the axis. Since the second teeth are arranged in a circle around the same axis as the first teeth, the relative positions of the second teeth and the first teeth can be precisely changed for precise control of the output characteristics, The inner peripheral surface of one of the first stator or the second stator may be slightly larger in diameter than the outer peripheral surface of the other, that is, the inner peripheral surface of the one may be In contact with the outer peripheral surface of the other.

In a further example, one of the outer peripheral surface or the inner peripheral surface of the first stator radially faces the second stator, a cylindrical rotation supporting surface is fonned in the one of the outer peripheral surface or the inner peripheral surface of the first stator and located around the axis, and the rotation supporting surface Is in direct or indirect contact with the second stator. With the stator according to this embodiment, the output characteristics of the rotary electric machine can be changed and precisely controller.

An example of a stator which is not an embodiment of the invention, but is useful for understanding the invention, is a stator for a radial gap type rotary electric machine located radially outside or inside a rotating shaft and facing a rotor located around the rotating shaft, including: a first stator having a plurality of first teeth arranged in a circle around an axis of the rotating shaft, and a cylindrical outer peripheral surface and a cylindrical inner peripheral surface located around the axis, and a second stator having a plurality of second teeth arranged in a circle around the axis and radially facing the first teeth, and a cylindrical outer peripheral surface and a cylindrical inner peripheral surface located around the axis, in which a coil is wound around each of the plurality of first teeth, in which the inner peripheral surface of one of the first stator or the second stator is larger in diameter than the outer peripheral surface of the other, in which the other is inserted in the one, and in which the first stator is fixed to a fixed member, and the second stator is supported for rotation about the axis by a circular cylindrical portion of the fixed member located around the axis.

According to this example, the stator includes a second stator and a first stator having coils, and the amount of magnetic flux flowing through the first teeth of the first stator and hence the output characteristics of the rotary electric machine can be changed by rotating the second stator around the axis. In addition, since the second teeth are rotatably supported by the cylindrical portion of the fixed member, the second stator can be rotated on the same track for precise control of the output characteristics..

The fixed member may be, for example, a case for covering the rotary electric machine, a crankcase, and a case for covering the driving force transmitting mechanism between the engine and the rear wheel, such as a case for a chain, a belt and a shaft.

In a further example, the second stator is in direct or indirect contact, on its inner peripheral surface or outer peripheral surface, with a cylindrical rotation supporting surface of the cylindrical portion of the fixing member. In this embodiment, the output characteristics of the rotary electric machine can be changed and precisely controlled.

A rotary electric machine according to the present embodiments includes any one of the stators of the present invention described above. According to the present embodiments, the output characteristics of the rotary electric machine can be changed and precisely controlled.

An engine according to the present embodiments is connected to a rotary electric machine including any one of the stators of the present invention described above. According to the present invention, since the output characteristics of the rotary electric machine can be changed with accuracy, assistive control for engine driving force can be precisely performed through a wide range. The connection between the rotary electric machine and the engine may be achieved by, for example, the crankshaft or a rotating shaft provided in the driving force transmitting path from the engine to the rear wheel, functioning also as the output shaft of the rotary electric machine.

A vehicle according to the present embodiments is provided with a rotary electric machine including any one of the stators of the present invention described above. According to the present invention, the output characteristics of the rotary electric machine can be changed with accuracy for precise control of the running condition of the vesicle. The vehicle includes a motorcycle (power-assisted bicycle (motorbike) or scooter), four-wheeled buggy (all terrain vehicle), snowmobile, four-wheeled buggy (all terrain vehicle) for two to four people, or the like.

### First Embodiment

Description is hereinafter repeated in other words of the first embodiment with reference to the drawings.

FIG, 1 is a side view of a motorcycle provided with a rotary electric machine having a stator, FIG. 2 is a side view of a rear part of the motorcycle, FIG. 3 is a sectional view taken along the line III-III of FIG. 2, and FIG. 4 is an enlarged view of the rotary electric machine having the stator shown in FIG. 3. FIG. 5 is an exploded perspective view of the rotary electric machine.

As shown in FIG. 1, the motorcycle 1 has a front wheel 3 at a lower front part of its vehicle body. The front wheel 3 is rotatably journaled at the lower end of a front fork 5. A steering shaft 7 extending upward is connected to the upper end of the front fork 5.

Handlebars 9 extending in the vehicle width direction are attached to the upper end of the steering shaft 7. A body frame 10 is attached to an intermediate portion of the steering shaft 7.

The body frame 10 extends toward a rear part of the vehicle body, first obliquely downward and then horizontally. The body frame 10 then extends obliquely upward. A seat 13 is placed on an upper rear part of the body frame 10. To the rear end of the body frame 10 is connected the upper end of a rear suspension 15. The lower end of the rear suspension 15 is connected to a rear end 16a of a rear arm 16 (see FIG. 2). The rear arm 16 rotatably journals a rear wheel 17. The rear wheel 17 is rotatably driven by the driving force of an engine 50 transmitted via a driving force transmitting mechanism such as a belt-driven continuously variable transmission. The engine 50 is located below an intermediate portion of the body frame 10.

The engine 50 has a cylinder 50a at its center. The cylinder 50a houses a piston 50b. The piston 50b is connected to the upper end of a connecting rod 50c, and a crankshaft 51 is attached to the lower end of the connecting rod 50c. The crankshaft 51 is an output shaft of the engine 50, and the driving force of the engine 50 is transmitted from the crankshaft 51 to the rear wheel 17 via the driving force transmitting mechanism.

A rotary electric machine 20 is disposed outside the engine 50 in the vehicle width direction (the side indicated by α in FIG. 3). The crankshaft 51 is an output shaft of the rotary electric machine 20 (see FIG. 3). The rotary electric machine 20 can assist the driving force of the engine 50 to drive the vehicle or drive the vehicle by its own driving force. The rotary electric machine 20 functions as a power generator when the amount of charge in a battery (not shown) is lower than a predetermined value.

As shown in FIG. 3 or FIG. 4, a case cover 19 covering a crankcase 50d from a side thereof holds a bearing 52. The crankshaft 51 is rotatably supported by the bearing 52. The proximal side of the crankshaft 51 is rotatably supported by an oil-retaining bearing 53 held by the crankcase 50d. The case cover 19 has a circular cylindrical portion 19a surrounding an end 51 c of the crankshaft 51 and extending inward in the vehicle width direction (the direction from the end 51 c to the proximal side of the crankshaft 51). The cylindrical portion 19a supports a stator 25 of the rotary electric machine 20, which is described later. The structure of the cylindrical portion 19a for supporting the stator 25 is described later in detail.

A starting speed-reduction gear 61, a one-way clutch 55, and the rotary electric machine 20 are mounted on the crankshaft 51 in this order from the proximal side (the side to which the connecting rod 50c is coupled) to the end 51 c.

The starting speed-reduction gear 61 is connected to a starter motor 60 via a gear 62. To start the engine, the driving force of the starter motor 60 is transmitted to the crankshaft 51 via the gear 62, the starting speed-reduction gear 61, the one-way clutch 55 and a yoke 71 of the rotary electric machine 20. After the engine 50 is started, the starter motor 60 is stopped and the one-way clutch 55 rotates independently from the starting speed-reduction gear 61 to shut off the transmission of the driving force of the engine 50 to the starter motor 60. The starting speed-reduction gear 61 rotates freely with respect to the crankshaft 51.

The rotary electric machine 20 is an axial gap type rotary electric machine, that is, a rotary electric machine in which a stator faces a rotor 70 along the axial direction of a rotating shaft (crankshaft 51). The rotary electric machine 20 is attached to the crankshaft 51 at a position outside the one-way clutch 55 in the vehicle width direction (the direction from the proximal side to the end 51 c of the crankshaft 51).

The rotary electric machine 20 has the rotor 70 and the stator 25 arranged in this order from the proximal side of the crankshaft 51. The rotor 70 has a yoke 71 and field magnets 23. The yoke 71 is generally cup-shaped and has a disk-shaped disk portion 71 a having at its center a through hole through which the crankshaft 51 extends, a cylindrical outer cylindrical portion 71 b extending from the periphery of the disk portion 71 a toward the stator 25 along the axial direction of the crankshaft 51 (which is hereinafter referred to as "axial direction"), and a cylindrical inner cylindrical portion 71 c extending from the edge of the through hole of the disk portion 71 a in the axial direction.

The inner peripheral surface of the inner cylindrical portion 71 c of the yoke 71 gradually decreases in diameter toward the end 51 c of the crankshaft 51. The crankshaft 51 has a taper portion 51 b which gradually decreases in diameter toward the end 51 c. A nut 57 is fitted on the crankshaft 51 from outside of the yoke 71 in the vehicle width direction. The nut 57 presses the yoke 71 toward the proximal side of the crankshaft 51 and brings the inner peripheral surface of the inner cylindrical portion 71c of the yoke 71 into press contact with the outer peripheral surface of the taper portion 51 b of the crankshaft 51. The yoke 71 is thereby in frictional engagement with the crankshaft 51, and the driving force of the rotary electric machine 20 is transmitted to the crankshaft 51 via the yoke 71.

The disk portion 71 a has a plurality of through holes arranged in a circle. The one-way clutch 55 has bolt holes for bolt fixing at positions facing the through holes of the disk portion 71 a. Bolts are inserted in the through holes and the bolt holes facing each other and the yoke 71 is secured to the one-way clutch 55.

A plurality of field magnets 23 are joined to the side of the disk portion 71 a of the yoke 71 facing the stator 25 and arranged such that the line perpendicular to their end faces is parallel to the axial direction. The plurality of field magnets 23 are arranged in a circle around the axis of the crankshaft 51 with their magnetic poles (N-pole and S-pole) alternating in polarity.

The outer cylindrical portion 71 b of the yoke 71 has a large thickness so that the yoke 71 has a centrifugal mass and functions also as a flywheel. A plurality of projections 71 g, which are used to detect the rotational angle, are formed on the outer peripheral surface of the outer cylindrical portion 71 b and arranged circumferentially at regular intervals (see FIG. 5). Projections 71 h are formed at positions (angles) corresponding to positions (angles) in the disk portion 71 a corresponding to the field magnets 23 with the same polarity (N-pole or S-pole).

As described above, the rotary electric machine 20 has a stator 25. The stator 25 according to this embodiment has a first stator 30 and a second stator 40 facing the first stator 30 along the axial direction. In the stator 25, the second stator 40 rotates about the axis of the crankshaft 51 (which is hereinafter referred to as "about the axis") to change the output characteristics of the rotary electric machine 20.

The stator 25 is described in detail below.

First, the first stator is described in detail with reference to FIG. 3 to FIG. 10. FIG. 6(a) is a plan view of the first stator 30, FIG. 6(b) is a bottom view of the first stator 30, FIG. 7 is a sectional view taken along the line VII-VII of FIG. 6, FIG. 8 is a sectional view taken along the line VIII-VIII of FIG. 6, and FIG. 9 and FIG. 10 are perspective views of the first stator. FIG. 9 is a perspective view illustrating the side of the first stator 30 facing the rotor 70, and FIG. 10 is a perspective view illustrating the side of the first stator 30 facing the second stator 40.

The first stator 30 has a plurality of first teeth 34 made of iron, and coils 31 wound around the first teeth 34. The first teeth 34 and the coils 31 are molded by a resin part 36 made of a resin containing a lubricant. The plurality of first teeth 34 are arranged in a circle around the axis of the crankshaft 51, and the first stator 30 has a generally annular shape (see FIG. 6).

As shown in FIG. 8, each of the first teeth 34 has a coil winding portion 34c and a magnet opposing portion 34d facing the field magnets 23 of the rotor 70. The width of the magnet opposing portion 34d in the transverse direction (the circumferential direction of the first stator 30) is formed to be larger than the width of the coil winding portion 34c. Thus, the magnet opposing portion 34d has an end face 34a (end face facing the field magnets 23) larger than an end face 34b (end face facing the second stator 40) of the coil winding portion 34c. The coil 31 is wound around the side surface of the coil winding portion 34c. The second stator 40 side edges of the coil winding portion 34c are chamfered, so that the width of the end face 34b in the transverse direction is smaller than the width of the coil winding portion 34c.

The distance j between transverse end faces of the magnet opposing portions 34d of adjacent first teeth 34 is greater than the distance k between the end faces 34b of the coil winding portions 34c and end faces 41 a of second teeth 41 of the second stator 40 (see FIG. 4), which is described later.

The resin part 36 has a circular cylindrical inner peripheral portion 36a located radially inside the first teeth 34 and the coils 31 (on the side of the axis of the crankshaft 51) and surrounding the axis of the crankshaft 51, and a circular cylindrical outer peripheral part 36b located radially outside the first teeth 34 and the coils 31 and surrounding the axis of the crankshaft 51 (see FIG. 4 or FIG. 6).

The outer peripheral portion 36b extends outward in the vehicle width direction (the direction of the axis of the crankshaft 51, from the proximal side (the cylinder 50a side) to the end 51 c). A plurality of engaging portions 37 (37a, 37b, 37c, 37d) extend radially outward from the edge of the outer peripheral portion 36b (see FIG. 6). Each of the engaging portions 37 has a recess opening outward in the vehicle width direction. The case cover 19 has recesses 19c at positions facing the engaging portions 37. One ends of pins 38 are fitted in the recesses of the engaging portions 37, and the other ends of the pins 38 are removably fitted in the recesses 19c of the case cover 19 facing the engaging portions 37. Therefore, the first stator 30 is attached to the case cover 19 so as not to be rotatable about the axis of the crankshaft 51 but to be movable in the axial direction.

The edge of the outer peripheral portion 36b between the engaging portion 37a and the engaging portion 37b adjacent to each other is cut out. Therefore, the first stator 30 has a cutout 39 opening radially outward. A gear engaging portion 45 formed on the second stator 40 protrudes radially outward through the cutout 39. The gear engaging portion 45 is in meshing engagement with a gear 68 for rotating the second stator 40 about the axis (see FIG. 5). The gear engaging portion 45 of the second stator 40 and the rotation of the second stator 40 are described later in detail.

A bearing supporting surface 36c is formed on the inner periphery of the inner peripheral portion 36a of the resin part 36 of the first stator 30. The bearing supporting surface 36c is annular and perpendicular to the axis of the crankshaft 51. An annular bearing supporting surface 71d perpendicular to the axis of the crankshaft 51 is formed on the outer periphery of the inner cylindrical portion 71 c of the yoke 71. An annular bearing 63 is interposed between the bearing supporting surface 71 d of the yoke 71 and the bearing supporting surface 36c of the first stator 30. The annular bearing 63 restricts the first stator 30 from moving toward the yoke 71. That is, as described before, the first stator 30 is attached to the case cover 19 for movement in the axial direction. The first teeth 34 are attracted toward the field magnets 23 by the magnetic force of the field magnets 23. The bearing 63 is supported on the bearing supporting surface 71 d of the yoke 71 and presses the first stator 30 outward in the vehicle width direction against the magnetic force of the field magnets 23 to restrict the first stator 30 from moving toward the yoke 71.

The inner peripheral portion 36a of the resin part 36 of the first stator 30 has a contacted portion 36k extending outward in the vehicle width direction beyond a plane including the second stator 40 side end faces 34b of the first teeth 34. The contacted portion 36k is of a cylindrical shape surrounding the axis of the crankshaft 51. The entire inner peripheral surface of the contacted portion 36k is in contact with the outer peripheral surface of the cylindrical portion 19a of the case cover 19, whereby the radial position of the first stator 30 is fixed and the first stator 30 is prevented from vibrating when the rotary electric machine 20 is driven.

The contacted portion 36k has an end face (contacting face) 36h perpendicular to the axial direction on the outside in the vehicle width direction. The second stator 40 is in contact with the end face 36h. The contact of the second stator 40 with the end face 36h is described later in detail.

The second stator 40 is described in detail with reference to FIG. 3 to FIG. 5 and FIG. 11 to FIG. 15. FIG. 11 is a plan view of the second stator 40, FIG. 12 is a sectional view taken along the line XII-XII of FIG. 11, FIG. 13 is a sectional view taken along the line XIII-XIII of FIG. 11, FIG. 14 and FIG. 15 are perspective views of the second stator 40. FIG. 14 is a perspective view illustrating the side of the second stator 40 facing the first stator 30, and FIG. 15 is a perspective view illustrating the side of the second stator 40 opposite the side facing the first stator 30.

The second stator 40 has a plurality of second teeth 41 arranged in a circle around the axis of the crankshaft 51 and facing the end faces 34b of the first teeth 34, and a disk-shaped base 42 for holding the second teeth 41 in a circular configuration. The second stator 40 also has a resin part 43 made of a resin containing a lubricant and attached to the other side of the base 42.

As shown in FIG. 13 or FIG. 14, each of the second teeth 41 is made of iron and has a rectangular shape as viewed in a plan view. Each of the second teeth 41 is chamfered and has a hexagonal shape as viewed in a transverse section. The width of end faces 41 a of the second teeth 41, in the transverse direction (circumferential direction of the second stator 40), on the side of the first teeth 34 is formed to be smaller than the width of end faces 41 b on the other side. The base 42 has a plurality of fitting holes arranged in a circle, and the second teeth 41 are press-fitted in the fitting holes.

The resin part 43 has a generally annular shape, and has an annular contacting portion 43e extending radially inward. The contacting portion 43e has an inner periphery (rotation supported surface) 43d of a diameter equal to that of the outer periphery (rotation supporting surface) of the cylindrical portion 19a of the case cover 19, and the entire inner peripheral surface of the inner periphery 43d is in contact with the outer peripheral surface of the cylindrical portion 19a. The second stator 40 is thereby supported by the case cover 19 for rotation about the axis.

The contacting portion 43e of the second stator 40 is in contact with the first stator 30, whereby the distance between the end faces 34b of the first teeth 34 and the end faces 41 a of the second teeth 41 is restricted.

More specifically, the second teeth 41 of the second stator 40 are attracted toward the first stator 30 by the magnetic force of the first stator 30. The annular contacting portion 43e has an end face 43c (contacting face), on the inside in the vehicle width direction, of inside and outside diameters generally equal to those of the end face 36h (contacted face) of the contacted portion 36k of the first stator 30. The end face 36h of the contacted portion 36k is in contact with the end face 43c and presses the second stator 40 outward in the vehicle width direction against the magnetic force to restrict the second stator 40 from moving toward the first stator 30. The difference between the axial length of the contacted portion 36k, that is, the distance from a plane including the end faces 34b of the first teeth 34 to the end face 36h of the contacted portion 36k, and the distance from a plane including the end faces 41 a of the second teeth 41 to the end face 43c of the contacting portion 43e is the distance k between the end faces 34b of the first teeth 34 and the end faces 41 a of the second teeth 41. Therefore, the first stator 30 regulates the distance k by the end face 36h of the contacted portion 36k.

An annular space is formed between the outer peripheral surface of the contacted portion 36k of the first stator 30 and the inner peripheral surface of the outer peripheral portion 36b of the first stator 30, and the second teeth 41 arranged in a circle are located in the space.

The resin part 43 is formed with the gear engaging portion 45 protruding radially outward and having a prescribed circumferential length. As described before, the gear engaging portion 45 protrudes radially outward through the cutout 39 formed by cutting out the outer peripheral portion 36b of the first stator 30 described before, and can reciprocate circumferentially within the cutout 39. The gear engaging portion 45 is in meshing engagement with the gear 68 located outside the rotary electric machine 20 and around which a wire 66a connected to a motor 66 is wound (see FIG. 2 or FIG. 5). The forward or reverse rotation of the motor 66 is transmitted via the gear 68 to the second stator 40, and the second stator 40 is rotated in forward or reverse about the axis of the crankshaft 51.

The rotation of the second stator 40 and the changes in the amount of magnetic flux caused by the rotation of the second stator 40 are described. FIG. 16 is a view illustrating the manner in which the second stator 40 rotates about the axis of the crankshaft 51, and FIG. 17 is a view illustrating the changes in the amount of magnetic flux. For the sake of explanation, the resin part 36 of the first stator 30, the resin part 43 of the second stator 40 and so on shown in FIG. 3 or FIG. 4 are omitted in these drawings, and the outer cylindrical portion 71 b of the yoke 71 is omitted in FIG. 16.

FIG. 16(a) shows a state in which the second teeth 41 of the second stator 40 are diametrically opposed to the first teeth 34 of the first stator 30. In this state, the distance between the end faces 34b of the first teeth 34 on the side of the second teeth 41 and the end faces 41 a of the second teeth 41 on the side of the first teeth 34 has a minimum value k. As described before, the first teeth 34 are so arranged that the gap j between the transverse end faces 34e of the magnet opposing portions 34d of adjacent first teeth 34 is greater than the gap k. Therefore, the magnetic resistance caused by the gap j is greater than the magnetic resistance caused by the gap k. In this case, as shown in FIG. 17(a), most of the magnetic flux formed between adjacent field magnets 23 passes through the coil winding portions 34c of the first teeth 34. Since the magnetic flux flows inside the coils 31, a strong magnetic flux is generated.

When the motor 66 is rotated in a forward direction, the second teeth 40 are moved through the intermediate positions shown in FIG. 16(b) to positions in the middle between adjacent first teeth 34 as shown in FIG. 16(c). Then, the gap between the first teeth 34 and the second teeth 41 increases and the magnetic resistance between the first teeth 34 and the second teeth 41 increases. Thus, as shown in FIG. 17(b), most of the magnetic flux generated between adjacent field magnets 23 flows from the magnet opposing portions 34d of the first teeth 34 to the magnet opposing portions 34d of adjacent first teeth 34. Since the magnetic flux does not flow inside the coils 31, a weak magnetic flux is generated.

Therefore, the magnetic flux from the field magnets 23 does not flow across the coils 31 (not shown) of the first teeth 34 and the magnetic resistance in the rotating direction of the rotor 70 caused by the magnetic flux across the coils 31 is cancelled. As a result, low-torque high-speed rotation can be achieved.

When the second teeth 41 are diametrically opposed to the first teeth 34 as shown in FIG. 16(a), one end face of the gear engaging portion 45 described before is in contact with one end face 39a of the cutout 39. When the second teeth 41 are in the middle between adjacent first teeth 34 as shown in FIG. 16(c), the other end face of the gear engaging portion 45 is in contact with the other end face 39b of the cutout 39. That is, the end faces 39a and 39b of the cutout 39 regulate the range through which the second stator 40 can rotate.

In the rotary electric machine 20 described above, the stator 25 has a second stator 40 and a first stator 30 having coils 31, and the output characteristics of the rotary electric machine 20 can be changed by rotating the second stator 40. In addition, the first stator 30 rotatably supports the second stator 40 against the attractive force between the stators. Therefore, the distance k between the end faces 34b of the first teeth 34 and the end faces 41 a of the second teeth 41 can be set accurately and hence the output characteristics can be controlled accurately, regardless of the shape of the case cover 19 and so on.

In the stator 25 described above, the contacted portion 36k of the inner peripheral portion 36a of the first stator 30 is in direct contact with the contacting portion 43e of the second stator 40 in order for the first stator 30 to regulate the distance k. However, the contacted portion 36k may be in indirect contact with the contacting portion 43e in order for fhe first stator 30 to regulate the distance.

FIG. 18 and FIG. 19 are sectional views of a stator 25a according to this embodiment, and FIG. 19 is an enlarged view of FIG. 18. The same parts as those in the stator 25 described above are designated in these drawings by the same reference numerals and their description is omitted.

The resin part 36 of the first stator 30 has an inner peripheral portion 36a located radially inside the first teeth 34 and the coils 31. The inner peripheral portion 36a has a contacted portion 36k on the outside in the vehicle width direction. The resin part 43 of the second stator 40 has a contacting portion 43e located radially inside the second teeth 41 and the base 42. A bearing 64 is interposed between the contacted portion 36k and the contacting portion 43e, and the first stator 30 rotatably supports the second stator 40 and regulates the distance k.

More specifically, the contacted portion 36k has an annular contacted surface 36f perpendicular to the axial direction. The contacted surface 36f is located slightly outside a plane including the end faces 34b of the first teeth 34 on the side of the second teeth 41 in the vehicle width direction. The contacted portion 36k also has a cylindrical rotation supporting surface 36g extending outward in the vehicle width direction from the inner periphery of the contacted surface 36f.

The contacting portion 43e has an annular bearing supported surface 43a perpendicular to the axial direction, and a cylindrical rotation supported surface 43b extending inward in the vehicle width direction from the outer periphery of the bearing supported surface 43a.

The bearing 64 is interposed between the contacted surface 36f of the contacted portion 36k and the bearing supported surface 43a of the contacting portion 43e. The contacted surface 36f restricts the second stator 40 from moving toward the first stator 30 against the magnetic force attracting the second stator 40 toward the first stator 30.

The difference between the distance from a plane including the end faces 34b of the first teeth 34 to an end face 64a of the bearing 64 on the side of the second stator 40 and the distance from a plane including the end faces 41 a of the second teeth 41 to the bearing supported surface 43a is the distance k. Therefore, the first stator 30 regulates the distance k between the end faces 41 a of the second teeth 41 and the end faces 34b of the first teeth 34.

The diameter of the rotation supporting surface 36g of the contacted portion 36k is equal to the inside diameter of the bearing 64, and the entire rotation supporting surface 36g is in contact with the inner peripheral surface of the bearing 64. The diameter of the rotation supported surface 43e of the second stator 40 is equal to the diameter of the outer peripheral surface of the bearing 64, and the entire rotation supported surface 43e is in contact with the outer peripheral surface of the bearing 64. Therefore, the first stator 30 can rotatably support the second stator 40 and prevent the second stator 40 from oscillating radially.

The first stator 30 of the stator 25a shown in FIG. 18 and FIG. 19 is secured to the case cover 19 and cannot move in the axial direction and rotate about the axis, unlike the rotary electric machine 20 described before. More specifically, the outer peripheral portion 36b of the first stator 30 extends outward in the vehicle width direction, and a plurality of engaging portions 37 extend radially outward from the edge of the outer peripheral portion 36b. The engaging portions 37 are fixed by bolts to the case cover 19.

The rotor 21 facing the first stator 30 along the axial direction is slidable in the axial direction. More specifically, a flywheel 56 through which the crankshaft 51 extends is secured to the one-way clutch 55 on the outside in the vehicle width direction. The flywheel 56 has a generally cup shape, and has a disk portion 56a having a through hole through which the crankshaft 51 extends, an outer cylindrical portion 56b extending outward in the vehicle width direction from the periphery of the disk portion 56a, and an inner cylindrical portion 56c extending outward in the vehicle width direction from the edge of the through hole of the disk portion 56a. A plurality of recesses 56e extending linearly in the axial direction are formed in the inner peripheral surface of the outer cylindrical portion 56b. The yoke 22 of the rotor 21 has a generally disk-like shape, and has a disk portion 22a having a through hole through which the crankshaft 51 extends, and an inner cylindrical portion 22b extending outward in the vehicle width direction from the edge of the through hole of disk portion 22a. The disk portion 22a has projections 22c protruding radially outward from the periphery thereof. The number of the projections 22c is the same as the number of the recesses 56a of the flywheel 56. The projections 22c of the yoke 22 are engaged with the recesses 56a of the flywheel 56 for sliding movement so that the yoke 22 can slide in the axial direction.

The yoke 22 of the rotor 21 is in indirect contact with the first stator 30 and restricted from moving toward the first rotor 30. More specifically, the first stator 30 has an inner peripheral portion 36a having an annular bearing supporting portion 36c perpendicular to the axial direction. An annular contacted surface 22d perpendicular to the axial direction is formed on the outer periphery of the inner cylindrical portion 22b of the yoke 22. A bearing 63 is interposed between the contacted surface 36c of the first stator 30 and the yoke 22. The yoke 22 is attracted toward the first stator 30 by the magnetic force of the field magnets 23. The first stator 30 restricts the yoke 22 from moving toward the first stator 30 against the magnetic force via the bearing 63 on the contacted surface 36c.

In the rotary electric machine described above, the resin part 43 made of a resin is attached to the base 42 of the second stator 40. However, a metal may be attached to the base 42 so as to secure the base 42 and the second teeth 41 and to provide the metal with the contacting portion 43e for contact with the second stator 30.

### Second Example

Next description is repeated in other words of the second example which is not an embodiment of the invention, with reference to the drawings.

FIG. 20 is a sectional view of a rotary electric machine having a stator according to the second embodiment, and FIG. 21 is an explodes perspective view of the rotary electric machine. FIG. 22 is an enlarged view of FIG. 20. In FIG. 21, the crankshaft 51 is not shown. Again, in FIG. 20, the cylinder 50a located on the proximal side of the crankshaft 51 and so on are not shown. The same parts as those in the stators described above and the rotary electric machines having such stators are designated in FIG. 20 and FIG. 21 by the same reference numerals and their description is omitted.

A rotary electric machine 200 is a radial gap type rotary electric machine, that is, a rotary electric machine in which a stator is arranged radially inside or outside a rotor surrounding a rotating shaft (crankshaft 51) and faces the rotor.

More specifically, the rotary electric machine 200 has a rotor 210 and a circular cylindrical stator 250 located radially outside the field magnets 23. The rotor 210 has a generally cup-shaped yoke 240 and field magnets 23. The yoke 240 has a disk portion 240a having at its center a through hole through which the crankshaft 51 extends, a cylindrical outer cylindrical portion 240b extending outward in the vehicle width direction from the outer periphery of the disk portion 240a, and an inner cylindrical portion 240c extending outward in the vehicle width direction from the edge of the through hole.

As in the case with the yoke 71 of the rotary electric machine 20, the disk portion 240a of the yoke 240 is secured to the one-way clutch 55 by bolts and the yoke 240 and the one-way clutch 55 are operatively linked with each other. The field magnets 23 are joined to the outer peripheral surface of the outer cylindrical portion 240b and arranged such that the line perpendicular to their one end faces 23a is directed radially outward.

The circular cylindrical stator 250 is located radially outside the outer cylindrical portion 240b of the yoke 240 and surrounds the outer cylindrical portion 240. The stator 250 has a circular cylindrical second stator 400 and a circular cylindrical first stator 300 inserted in the second stator.

The stator 250 is described in detail below. The first stator 300 is first described. The first stator 300 has a plurality of first teeth 34 radially facing the end faces 23a of the field magnets 23, and coils 31 wound around the first teeth 34. The first teeth 34 are arranged in a circle around the axis of the crankshaft 51. The first teeth 34 and the coils 31 are molded by a resin part 360 made of a resin containing a lubricant. The first stator 300 as a whole has a circular cylindrical shape. Each of the first teeth 34 of the first stator 300 has a magnet opposing portion 34d having an end face 34a facing the field magnets 23 and larger in size than an end face 34b on the opposite side as the first teeth 34 of the stator 25 described before. The end faces 34a and 34b of the first teeth 34 are curved in accordance with the inner and outer peripheral surfaces of the circular cylindrical first stator 300.

The resin part 360 has a disk-shaped inner disk portion 360a inside the first teeth 34 and the coils 31 in the vehicle width direction and a circular cylindrical outer circular cylindrical portion 360b outside the first teeth 34 and the coils 31 in the vehicle width direction. The outer circular cylindrical portion 360b has an end face 360c on the outside in the vehicle width direction which is in contact with the inner wall of the case cover 19. The end face 360c has a plurality of bolt holes at positions on the same radius. The case cover 19 has through holes at positions facing the bolt holes of the outer circular cylindrical portion 360b. Bolts are inserted in the through holes and the bolt holes facing each other and the first stator 300 is secured to the case cover 19 so as not to be movable in the axial direction and rotatable about the axis.

An outer peripheral surface (outer rotation supporting surface) 360d having a diameter greater than that of an outer peripheral surface including the end faces 34b of the plurality of first teeth 34 is formed on an outer periphery of the outer circular cylindrical portion 360b at the outer end in the vehicle width direction. A groove-like recess 360g is circumferentially formed in the outer rotation supporting surface 360d. A C-shaped circlip 87 is fitted in the recess 360g to restrict the second stator 400 from moving in the axial direction. Detailed description about the restriction on the movement of the second stator 400 in the axial direction is made later.

An annular stopper portion 360e extends radially outward from an end of the inner disk portion 360a on the inside in the vehicle width direction. An outer peripheral surface (inner rotation supporting surface 360f) having a diameter greater than that of the outer peripheral surface including the end faces 34b of the plurality of first teeth 34 arranged in a circle is formed on the inner disk portion 360a inside the stopper portion 360e in the vehicle width direction (the side where the first teeth 34 are buried). The diameter of the inner rotation supporting surface 360f is equal to the diameter of the outer rotation supporting surface 360d formed on the outer circular cylindrical portion 360b.

The second stator 400 is next described. The second stator 400 has second teeth 41 opposed to the end faces 34b of the first teeth 34, and a circular cylindrical base 42 for holding the second teeth 41. The second teeth 41 are arranged in a circle around the crankshaft 51. The second teeth 41 and the base 42 are molded by a resin part 430 made of a resin containing a lubricant.

The second stator 400 is in contact with the first stator 300 and supported for rotation about the axis of the crankshaft 51. More specifically, the resin part 430 has an annular outer supported portion 430a located outside the second teeth 41 in the vehicle width direction, and an annular inner supported portion 430b located inside the second teeth 41 in the vehicle width direction. The inside diameter of the outer supported portion 430a is equal to the inside diameter of the inner supported portion 430b. The inside diameter of the outer supported portion 430a is equal to the diameter of the outer rotation supporting surface 360d of the first stator 300. The inside diameter of the inner supported portion 430b is equal to the diameter of the inner rotation supporting surface 360f of the first stator 300. The entire inner peripheral surface of an end of the outer supported portion 430a and the entire inner peripheral surface of an end of the inner supported portion 430b are respectively in contact with the outer rotation supporting surface 360d and the inner rotation supporting surface 360f of the first stator 300. The second stator 400 is thereby supported for rotation about the axis of the crankshaft 51.

The distance between the end faces 34b of the first teeth 34 and the end faces 41 a of the second teeth is determined as the difference between the diameter of the outer rotation supporting surface 360d and the inner rotation supporting surface 360f of the first stator 300 and the diameter of the outer peripheral surface including the end faces 34b of the first teeth 34.

The second stator 400 is in contact with the first stator 300 and restricted from moving in the axial direction. More specifically, the inner supported portion 430b of the second stator 400 has an end face 430d on the inside in the vehicle width direction, and the end face 430d is in contact with the stopper portion 360e of the first stator 300, whereby the second stator 400 is restricted from moving inward in the vehicle width direction. A groove-like recess 360g described before is formed in the outer rotation supporting surface 360d of the first stator 300 where an end face 430e, on the outside in the vehicle width direction, of the outer supported part 430a of the second stator 400 is located. A circlip 87 is fitted in the recess 360g. The periphery of the circlip 87 protruding radially outward from the outer peripheral surface of the outer rotation supporting surface 360d is in contact with an end of the second stator 400 to restrict the second stator 400 from moving outward in the vehicle width direction.

A gear engaging portion 450 protrudes radially outward from an end of the outer supported portion 430a of the resin part 430. As in the case with the stator 25 of the axial gap type rotary electric machine described before, a gear 68 is in meshing engagement with the gear engaging portion 450, and the second stator 400 is rotated in forward or reverse when the motor 66 rotates in forward or reverse.

In the rotary electric machine 200 described above, the stator 250 has a second stator 400 and a first stator 300 having coils 31, and the output characteristics of the rotary electric machine 200 can be changed by rotating the second stator 400. The first stator 300 has cylindrical rotation supporting surfaces 360d and 360f in contact with the second stator 400. Therefore, the first stator 300 can prevent the second teeth 41 from oscillating radially and rotatably supports the second teeth 41 to ensure precise control of the output characteristics.

The circular cylindrical stator 250 according to the second example described above is located radially outside the outer cylindrical portion 240b of the yoke 240 of the rotor 210. However, the stator may be located otherwise, such as radially inside the outer cylindrical portion 240b of the yoke 240, for example.

FIG. 23 is a sectional view of a rotary electric machine 200a having a stator according to this example. In the drawing, only one side of the rotary electric machine 200a is shown. As shown in the drawing, a stator 250a is located radially inside the outer cylindrical portion 240b of the yoke 240. The second stator 400 of the stator 250a is located radially opposed to the field magnets 23. The first stator 300 having an outer peripheral surface of a diameter smaller than the inside diameter of the second stator 400 is located inside the inner peripheral surface of the second stator 400. As shown in the drawing, the inner peripheral surface of the first stator 300 is in contact with the outer peripheral surface of the circular cylindrical portion 19a of the case cover 19 extending in the axial direction. Therefore, the supporting strength for the first stator 300 is increased.

In the stator according to the second example described above, the first stator 300 is secured to the case cover 19 located outside the rotary electric machine 200 in the vehicle width direction. However, the first stator 300 may be secured otherwise, such as to the crankcase located on the inside in the vehicle width direction, for example.

FIG. 24 is a sectional view of a rotary electric machine 200b having a stator 250b according to this example, and FIG. 25 is an enlarged view of the stator 250b. As shown in FIG. 24, a crankcase 190 is located inside the rotary electric machine 200b in the vehicle width direction. A first stator 300b is attached to the crankcase 190. More specifically, the first stator 300b has a resin part 360 having a plurality of engaging portions 360i extending radially inward inside the first teeth 34 and the coils 31 in the vehicle width direction. Each of the engaging portions 360i has a bolt hole. The crankcase 190 has positioning through holes at positions facing the engaging portions 360i. Bolts are inserted in the bolt holes and the through holes facing each other and the first stator 300 is secured to the crankcase 190.

In the rotary electric machine 200b shown in the drawing, the yoke 240b of the rotor 210b has a circular cylindrical shape having at its center a through hole through which the crankshaft 51 extends, and the field magnets 23 are buried in the outer peripheral surface of the yoke 240b. Therefore, the yoke 240b functions also as a flywheel because of its weight. Air cooling fins 100 are attached to the outside of the yoke 240b in the vehicle width direction. A case 101 made of a resin is located outside the air cooling fins 100 in the vehicle width direction. The case 101 has a plurality of air circulation holes 101 a outside the air cooling fins 100 in the vehicle width direction. The air cooling fins 100 rotate together with the rotor 210b and thereby introduce air outside the rotary electric machine 200b into the rotary electric machine 200b to cool the rotary electric machine 200b. The crankshaft 51 is rotatably supported by a bearing (not shown) inside the crankcase 190 located inside the rotary electric machine 200b in the vehicle width direction.

In the stator described above, the first stator 300 and the second stator 400 are in direct contact with each other. However, the first stator 300 may rotatably support the second stator 400 via a bearing interposed between the inner peripheral surface of the second stator 400 and the outer peripheral surface of the first stator 300, for example.

### Third Example

Next description is repeated in other words of the third example which is not an embodiment of the invention, with reference to the drawings.

FIG. 26 is a sectional view of a rotary electric machine having a stator according to the third embodiment, and FIG. 27 is an exploded perspective view of the rotary electric machine. FIG. 28 is an enlarged view of the stator in FIG. 26. The crankshaft 51 is not shown in FIG. 27, and the cylinder 50a located on the proximal side of the crankshaft 51 and so on are not shown In FIG. 26. The same parts as those in the stator 250 described above and the rotary electric machine 200 having the stator 250 are designated in FIG. 26 to FIG. 28 by the same reference numerals and their description is omitted.

A rotary electric machine 220 having a stator 225 according to this example is generally the same as the radial gap type rotary electric machine described before, and characterized in that the stator 225 has a first stator 330 and a second stator 440, and that the second stator 440 has a generally circular cylindrical shape smaller in diameter than the first stator 330 and is rotatably supported by the case cover 19.

The stator 225 is described in detail below. The first stator 330 is first described. The first stator 330 has a plurality of first teeth 3.4 located radially facing the field magnets 23, and coils 31 wound around the first teeth 34. The plurality of first teeth 34 are arranged in a circle around the axis of the crankshaft 51. The first teeth 34 and the coils 31 are molded by a resin part 336 made of a resin containing a lubricant.

The resin part 336 has a disk-shaped inner resin portion 336a inside the first teeth 34 and the coils 31 in the vehicle width direction, and a generally disk-shaped outer resin portion 336b outside the first teeth 34 and the coils 31 in the vehicle width direction.

The outer resin portion 336b extends outward in the vehicle width direction and has a plurality of engaging portions 337 protruding radially outward from the edge thereof. Each of the engaging portions 337 has a bolt hole. The engaging portions 337 are in contact with the case cover 19 on their end faces, and the case cover 19 has through holes at positions facing the engaging portions 337. Bolts are inserted in the through holes and the bolt holes facing each other, and the first stator 330 is secured to the case cover 19 and cannot move in the axial direction and the radial direction. The part of the outer resin part 336b between two adjacent engaging portions 337 is cut out to form a cutout 339 in the first stator 330. A gear engaging portion 445 of the second stator 440 protrudes radially outward through the cutout 339. The gear engaging portion 445 is described in detail later.

The inner resin portion 336a has an annular stopper portion 336c of a diameter smaller than that of an inner peripheral surface including the end faces 34b radially inside the first teeth 34. An end of the second stator 440 is in contact with the stopper portion 336c and the second stator 440 is restricted from moving in the axial direction. Detailed description about the restriction by the stopper portion 336c on the movement of the second stator 440 in the axial direction is made later.

The second stator is next described. The second stator 440 has second teeth 41 located radially opposed to the first teeth 34, and a circular cylindrical base 42 for holding the second teeth 41 in an annular configuration. The second teeth 41 and the base 42 are molded by a resin part 443 made of a resin containing a lubricant. The resin part 443 has a cylindrical resin portion 443a extending in the axial direction and a disk-shaped resin portion 443b having a disk-like shape and extending radially outward from the edge of the cylindrical resin portion 443a on the outside in the vehicle width direction.

The cylindrical resin portion 443a of the second stator 440 is rotatably supported by the case cover 19. More specifically, the case cover 19 has a circular cylindrical portion 19a extending along the axial direction of the crankshaft 51. The diameter of the outer peripheral surface (rotation supporting surface) of the cylindrical portion 19a and the diameter of the inner peripheral surface of the cylindrical resin portion 443a are equal to each other, and the entire inner peripheral surface of the cylindrical resin portion 443a is in contact with the outer peripheral surface of the cylindrical portion 19a. The second stator 440 is thereby restricted from oscillating radially and supported for rotation about the axis of the crankshaft 51.

Since the first stator 330 is secured to the case cover 19, the distance between the end faces 34b of the first teeth 34 on the side of the second teeth and the end faces 41 a of the second teeth 41 on the side of the first teeth 34 is determined depending on the thickness of the cylindrical resin portion 443a.

An end 443c of the cylindrical resin portion 443a on the inside in the vehicle width direction is in contact with the stopper portion 336c of the first stator 330. Therefore, the second stator 440 is restricted from moving in the axial direction.

The disk-shaped resin portion 443b has a gear engaging portion 445 extending radially outward. As in the case with the gear engaging portion described before, the gear engaging portion 445 protrudes radially outward through the cutout 339 of the first stator 330 and is in meshing engagement with the gear 68. The second stator 440 is rotated in forward or reverse when the motor 66 rotates in forward or reverse.

In the rotary electric machine 220 described above, the stator 225 has a second stator 440 and a first stator 330 having coils 31, and the output characteristics of the rotary electric machine 220 can be changed by rotating the second stator 440. Since the first stator 330 is secured to the case cover 19, the entire inner peripheral surface of the second stator 440 is in contact with the outer peripheral surface (rotation supporting surface) of the cylindrical portion 19a of the case cover 19, and the second teeth 41 cannot be oscillated radially, the output characteristics can be controlled precisely.

In the stator 225 described above, the second stator 440 is in direct contact with the outer peripheral surface of the cylindrical portion 19a of the case cover 19. However, the second stator 440 may be rotatably supported via a bearing interposed between the inner peripheral surface of the second stator 440 and the cylindrical portion 19a, for example.

Thus, according to a particularly preferred embodiment, in order to provide a stator for a rotary electric machine which enables precise control of output characteristics, there is disclosed a stator 25 for an axial gap type rotary electric machine includes an annular first stator 30 having a plurality of first teeth 34 surrounding the axis of a crankshaft 50 and arranged in a circle, and an annular second stator 40 having a plurality of second teeth 41 opposed to the plurality of first teeth 34 in the direction of the axis, the second stator 40 being attracted toward the first stator 30 by a magnetic force and rotatable about the axis. A coil 31 is wound around each of the plurality of first teeth 34. The first stator 30 has a contacted surface 36h with which the second stator 40 is in contact, regulating a distance k in the direction of the axis between a surface of the first stator 30 facing the second stator 40 and a surface of the second stator 40 facing the first stator 30.

## Claims

1. Stator (25) for an axial gap type rotary electric machine (20) in which the stator (25) is opposed to a rotor (21) in a direction of an axis of a rotating shaft (51), comprising:
an annular first stator (30) having a plurality of first teeth (34) arranged in an annular shape surrounding the axis; and
wherein a coil (31) is wound around each of the plurality of first teeth (34);
**characterized by** further comprising
an annular second stator (40) having a plurality of second teeth (41) arranged in an annular shape surrounding the axis and opposed to the plurality of first teeth (34) in the direction of the axis, the second stator (40) being attracted toward the first stator by a magnetic force generated by the first stator (30) and rotatable about the axis,
wherein the first stator (30) has a contacted surface (36h, 36f) formed perpendicular to the axis supporting and being in direct contact or via a bearing (64) in contact with the second stator (40) for ensuring a distance (k) in the direction of the axis between end faces (34b) of the first teeth (34), which face the second stator (40), and end surfaces (41 a) of the second teeth (41), which face the first stator (30).

## Patentansprüche

1. Stator (25) für eine rotierende elektrische Maschine (20) vom Axialspalt-Typ, in der der Stator (25) einem Rotor (21) in einer Richtung einer Achse einer Drehwelle (51) gegenüberliegt, umfassend:
einen ringförmigen ersten Stator (30) mit einer Vielzahl erster Zähle (34), die in einer Ringform angeordnet sind, die die Achse umgibt; und
wobei eine Spule (31) um jeden der Vielzahl erster Zähne (34) herumgewickelt ist;
**dadurch gekennzeichnet, dass** er des Weiteren umfasst:
einen ringförmigen zweiten Stator (40) mit einer Vielzahl zweiter Zähne (41), die in einer Ringform angeordnet sind, die die Achse umgibt, und die der Vielzahl erster Zähne (34) in der Richtung der Achse gegenüberliegen, wobei der zweite Stator (40) durch eine Magnetkraft, die von dem ersten Stator (30) erzeugt wird, in Richtung des ersten Stators angezogen wird und um die Achse herum gedreht werden kann,
wobei der erste Stator (30) eine Kontaktfläche (36h, 36f) aufweist, die senkrecht zu der Achse ausgebildet ist und den zweiten Stator (40) trägt und mit ihm direkt oder über ein Lager (64) in Kontakt ist, um einen Abstand (k) zwischen Endflächen (34b) der ersten Zähne (34), die dem zweiten Stator (40) zugewandt sind, und Endflächen (41a) der zweiten Zähne (41), die dem ersten Stator (30) zugewandt sind, in der Richtung der Achse zu gewährleisten.

## Revendications

1. Stator (25) pour une machine électrique tournante du type à entrefer axial (20) dans laquelle le stator (25) est opposé à un rotor (21) dans le sens d'un axe d'un arbre rotatif (51), comprenant :
un premier stator annulaire (30) qui a plusieurs premières dents (34) disposées suivant une forme annulaire autour de l'axe ; et
une bobine (31) étant enroulée autour de chacune des premières dents (34) ;
**caractérisé en ce qu'**il comprend également
un second stator annulaire (40) qui a plusieurs secondes dents (41) disposées suivant une forme annulaire autour de l'axe et opposées aux premières dents (34) dans le sens de l'axe, le second stator (40) étant attiré vers le premier stator par une force magnétique produite par le premier stator (30), et étant apte à tourner sur l'axe,
étant précisé que le premier stator (30) a une surface de contact (36h, 36f) formée perpendiculairement à l'axe et supportant et étant en contact direct ou par l'intermédiaire d'un palier (64) avec le second stator (40) pour garantir une distance (k) dans le sens de l'axe entre des surfaces d'extrémité (34b) des premières dents (34) situées en face du second stator (40), et des surfaces d'extrémité (41a) des secondes dents (41) situées en face du premier stator (30).
